(19) **Europäisches Patentamt / European Patent Office / Office européen des brevets**

(11) **EP 4 311 137 A1**

(12) # EUROPEAN PATENT APPLICATION
published in accordance with Art. 153(4) EPC

(43) Date of publication:
**24.01.2024 Bulletin 2024/04**

(21) Application number: **22771364.1**

(22) Date of filing: **14.03.2022**

(51) International Patent Classification (IPC):
**H04J 11/00** $^{(2006.01)}$     **H04L 27/26** $^{(2006.01)}$

(52) Cooperative Patent Classification (CPC):
**H04J 11/00; H04L 27/26**

(86) International application number:
**PCT/JP2022/011241**

(87) International publication number:
**WO 2022/196618 (22.09.2022 Gazette 2022/38)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **17.03.2021   JP 2021043624
03.06.2021   JP 2021093751
30.08.2021   JP 2021140429**

(71) Applicant: **University Public Corporation Osaka
Osaka-shi, Osaka 545-0051 (JP)**

(72) Inventor: **LIN Hai
Sakai-shi, Osaka 599-8531 (JP)**

(74) Representative: **Zimmermann, Tankred Klaus et al
Schoppe, Zimmermann, Stöckeler
Zinkler, Schenk & Partner mbB
Patentanwälte
Radlkoferstrasse 2
81373 München (DE)**

(54) **TRANSMITTER, TRANSMISSION METHOD, RECEIVER, AND RECEPTION METHOD**

(57)     A transmitter includes a transmission unit configured to transmit a frame in which M symbols are arranged in a delay direction and in each of which N symbols are arranged in a Doppler direction and a transmit pulse application unit configured to apply a transmit pulse, in which N square-root Nyquist pulses or Nyquist pulses corresponding to a Nyquist interval T/M are arranged one for each time interval T, to the frame. Thereby, the transmitter can generate a signal substantially orthogonal with respect to a Doppler axis and a delay axis, even in a delay-Doppler domain.

## FIG. 1

100

**Description**

[Technical Field]

The present invention relates to a transmitter, a transmission method, a receiver, and a reception method.
Priority is claimed on Japanese Patent Application No. 2021-043624, filed March 17, 2021, Japanese Patent Application No. 2021-093751, filed June 3, 2021, and Japanese Patent Application No. 2021-140429, filed August 30, 2021, the content of which is incorporated herein by reference.

[Background Art]

An important scenario in future mobile communication is high-speed mobile communication. For example, in Japan, the Linear Chuo Shinkansen, which travels at a speed of 500 km/h, is scheduled to operate in 2027. In such high-speed mobile communication, Doppler frequency shifts (Doppler) and propagation delays (delay) occur. For this reason, orthogonal frequency division multiplexing (OFDM) modulation adopted in the 4th and 5th generation mobile phone networks does not sufficiently function. In recent years, orthogonal time frequency space (OTFS) modulation for arranging symbols in a delay-Doppler domain has been proposed as a scheme more suitable than OFDM modulation for such high-speed mobile communication (for example, Patent Document 1, Patent Document 2, and Non-Patent Document 1).
Because a transmit pulse of amplitude 1 during a symbol length (time interval) T = 1/Δf' and of amplitude 0 otherwise, corresponding to a subcarrier interval Δf', is used in OFDM modulation, it is orthogonal with respect to both a frequency axis and a time axis.

[Citation List]

[Patent Document]

   [Patent Document 1]
   United States Patent No. 8547988

   [Patent Document 2]
   United States Patent No. 9590779

[Non-Patent Document]

[Non-Patent Document 1]
R. Hadani et al., "Orthogonal Time Frequency Space Modulation," 2017 IEEE Wireless Communications and Networking Conference (WCNC), San Francisco, CA, 2017, pp. 1-6

[Summary of Invention]

[Technical Problem]

However, in the delay-Doppler domain, because a frequency interval in a Doppler direction and a time interval in a delay direction are narrow, there is a problem that a method of generating signal orthogonal with respect to both of them has not been found.
The present invention has been invented in view of such circumstances, and provides a transmitter, a transmission method, a receiver, and a reception method for generating a signal which is orthogonal with respect to both the Doppler axis and the delay axis, even in a delay-Doppler domain.

[Solution to Problem]

According to an aspect of the present invention, there is provided a transmitter including: a transmission unit configured to transmit a frame in which M symbols are arranged in a delay direction and in each of which N symbols are arranged in a Doppler direction; and a transmit pulse application unit configured to apply a transmit pulse, in which N square-root Nyquist pulses or Nyquist pulses corresponding to a Nyquist interval T/M are arranged one for each time interval T, to each of the symbols.

According to another aspect of the present invention, in the aforementioned transmitter, the transmission unit includes an inverse Fourier transform unit configured to generate time-domain signals each corresponding to a set of N symbols in a Doppler domain of the frame by performing an inverse Fourier transform on the set, the transmit pulse application unit applies the transmit pulse to each of the time-domain signals corresponding to the set, and the transmission unit includes a time multiplexing unit configured to perform time multiplexing of the time-domain signals, which has been applied with the transmit pulse.

According to yet another aspect of the present invention, in the aforementioned transmitter, the transmission unit includes an inverse Fourier transform unit configured to generate time-domain signals each corresponding to a set of the N symbols in a Doppler domain of the frame by performing an inverse Fourier transform on the set, the transmit pulse application unit performs pulse shaping of the square-root Nyquist pulses or the Nyquist pulses corresponding to the Nyquist interval T/M after performing time multiplexing of the time-domain signals each corresponding to the set, and the time multiplexing of the time-domain signals each corresponding to a set is performed by arranging samples of the time-domain signals each corresponding to a set one by one with sample interval T/M so that the sets are interleaved.

According to yet another aspect of the present invention, the transmitter includes a CP addition unit configured to add a cyclic prefix to the frame or a CPP addition unit configured to add a cyclic prefix and a cyclic postfix to the frame.

According to yet another aspect of the present invention, there is provided a transmission method including steps of: transmitting a frame in which M symbols are arranged in a delay direction and in each of which N symbols are arranged in a Doppler direction; and applying a transmit pulse, in which N square-root Nyquist pulses or Nyquist pulses corresponding to a Nyquist interval T/M are arranged one for each time interval T, to the frame.

According to yet another aspect of the present invention, there is provided a receiver including: a reception unit configured to receive a signal frame in which M symbols are arranged in a delay direction and in each of which N symbols are arranged in a Doppler direction; and a matched filter unit configured to multiply the signal by a pulse, in which N square-root Nyquist pulses corresponding to a Nyquist interval T/M are arranged one for each interval T, and perform an integral process over a width of the pulse.

According to yet another aspect of the present invention, there is provided a reception method including steps of: receiving a signal frame in which M symbols are arranged in a delay direction and in each of which N symbols are arranged in a Doppler direction; and multiplying the signal by a pulse, in which N square-root Nyquist pulses corresponding to a Nyquist interval T/M are arranged one for each time interval T, and performing an integral process over a width of the pulse.

According to yet another aspect of the present invention, in the aforementioned transmitter, the transmission unit includes an orthogonal time frequency space (OTFS) modulation unit configured to generate a transmit signal by performing OTFS modulation on the frame containing transmission data, and the OTFS modulation unit includes an inverse discrete Fourier transform unit configured to generate a time-domain signal of each delay position by performing an inverse discrete Fourier transform on N symbols at each delay position within the frame; and a P/S conversion unit configured to perform parallel/serial conversion by regarding samples constituting the time-domain signal as M parallel samples in the delay direction.

According to yet another aspect of the present invention, in the aforementioned transmitter, the transmission unit includes an OTFS modulation unit configured to generate a transmit signal by performing OTFS modulation on the frame containing transmission data, and last L-1 rows in the delay direction within a frame arranged in a delay-Doppler domain to be OTFS-modulated by the OTFS modulation unit are known value symbols, and a maximum compensation value for channel delay is obtained by multiplying a sample interval by L-1.

According to yet another aspect of the present invention, there is provided a receiver for receiving a frame in which a width in a delay direction is M and a width in a Doppler direction is N, the receiver including: an S/P conversion unit configured to generate sample sequences each including N samples extracted per M samples from a received signal; and a discrete Fourier transform unit configured to perform a discrete Fourier transform on each of the sample sequences.

According to yet another aspect of the present invention, in the aforementioned receiver, symbols of delay positions M-L+1 to M-1 within the frame are known value symbols, and the receiver comprises a propagation path compensation unit configured to perform propagation path compensation using the known value symbols.

According to yet another aspect of the present invention, in the aforementioned receiver, a root Nyquist filter is applied to the received signal.

According to yet another aspect of the present invention, there is provided a reception method for use in a receiver for receiving a frame in which a width in a delay direction is M and a width in a Doppler direction is N, the reception method including: a first step of generating sample sequences each including N samples extracted per M samples from a received signal; and a second step of performing a discrete Fourier transform on each of the sample sequences.

[Advantageous Effects of Invention]

According to the present invention, a signal orthogonal with respect to both the Doppler axis and the delay axis can be generated even in a delay-Doppler domain.

[Brief Description of Drawings]

FIG. 1 is a schematic block diagram showing a configuration of a transmitter 100 according to a first embodiment of the present invention.
FIG. 2 is a schematic diagram for describing a wireless communication channel in the first embodiment.
FIG. 3 is a schematic diagram showing a map of a channel in a delay-Doppler domain in the first embodiment.
FIG. 4 is a graph plotting a transmit pulse u(t) in the first embodiment.
FIG. 5 is a graph showing a frequency response of an example of a pulse a(t) in the first embodiment.
FIG. 6 is a schematic diagram showing the correspondence of symbols placement between the delay-Doppler domain and a time-frequency (TF) domain in the first embodiment.
FIG. 7 is a schematic block diagram showing a configuration of a transmitter 200 in Example 1.
FIG. 8 is a schematic block diagram showing a configuration of a transmitter 300 in Example 2.
FIG. 9 is a schematic diagram for describing an operation of a time multiplexing unit 302 in the first embodiment.
FIG. 10 is a schematic block diagram showing a configuration of a receiver 400 in Example 3.
FIG. 11 is a schematic block diagram showing a configuration of a receiver 500 in Example 4.
FIG. 12 is a schematic block diagram showing a configuration of a matched filter unit 504 in Example 4.
FIG. 13 is a schematic block diagram showing a configuration of a receiver 600 in Example 5.
FIG. 14 is a schematic block diagram showing a configuration of a wireless communication system according to a second embodiment of the present invention.
FIG. 15 is a schematic block diagram showing a configuration of a transmitter 700 in the second embodiment.
FIG. 16 is a schematic block diagram showing a configuration of an ISFFT unit 703 in the second embodiment.
FIG. 17 is a schematic block diagram showing a configuration of an OFDM modulation unit 704 in the second embodiment.
FIG. 18 is a schematic diagram showing an example of a configuration of a frame generated by a frame generation unit 702 in the second embodiment.
FIG. 19 is a schematic block diagram showing a configuration of a transmitter 700 according to a modified example of the second embodiment.
FIG. 20 is a diagram schematically showing an example of an output of a CP addition unit 743 according to the second embodiment and its modified example.
FIG. 21 is a graph showing an example of a PSD distribution simulation result according to the second embodiment.
FIG. 22 is a schematic block diagram showing a configuration of a receiver 800 in the second embodiment.
FIG. 23 is a graph showing a bit error rate simulation result according to the second embodiment.

[Description of Embodiments]

Hereinafter, embodiments of the present invention will be described with reference to the drawings.

<First embodiment>

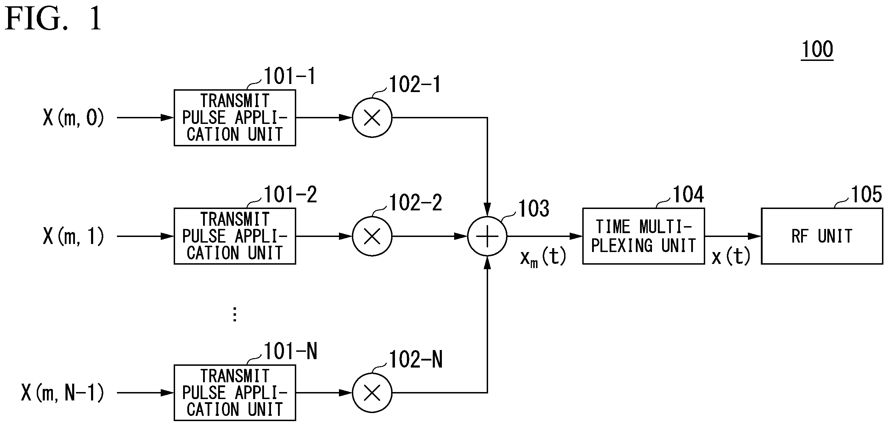

FIG. 1 is a schematic block diagram showing a configuration of a transmitter 100 according to a first embodiment of the invention. The transmitter 100 is provided in each device (for example, a terminal device, a base station device, or the like) of a wireless communication system, and wirelessly transmits a frame in which M symbols X(m, n), where n = 0, ..., N-1 and m = 0, ..., M-1, are arranged in a delay direction and in each of which N symbols X(m, n) are arranged in a Doppler direction using a plurality of carriers. The symbol X(m, n) is a transmit symbol of a data modulated using a modulation scheme such as binary phase-shift keying (BPSK), quadrature phase-shift keying (QPSK), or quadrature amplitude modulation (QAM), or a transmit symbol of a pilot signal, a null signal, etc.

The transmitter 100 includes N transmit pulse application units 101-1, 101-2, ..., 101-N, N subcarrier multiplication units 102-1, 102-2, ..., 102-N, a frequency multiplexing unit 103, a time multiplexing unit 104, and an RF unit (transmission unit) 105. The transmit pulse application units 101-1, ..., 101-N generate signals by applying (multiplying) a transmit pulse u(t-mTIM) to (by) symbols X(m, 0), X(m, 1), ..., X(m, N-1). That is, the $n^{th}$ transmit pulse application unit 101-n generates a signal X(m, n-1)u(t-mT/M). The transmit pulse u(t) used by the transmit pulse application units 101-1, ...,

101-N will be described below.

The subcarrier multiplication units 102-1, ..., 102-N generate subcarrier-wise signals via multiplying the signals generated by the transmit pulse application units 101-1, ..., 101-N by their carriers (subcarriers). A frequency interval between the subcarriers multiplied in the subcarrier multiplication units 102-1, ..., 102-N is a constant value $\Delta f=1/(NT)$. That is, when m = 0, a subcarrier to be multiplied in the subcarrier multiplication unit 102-1 is $e^{j2\pi 0\Delta ft}$, a subcarrier to be multiplied in the subcarrier multiplication unit 102-2 is $e^{j2\pi 1\Delta ft}$, and a subcarrier to be multiplied in subcarrier multiplication unit 102-N is $e^{j2\pi(N-1)\Delta ft}$. Furthermore, when m = 1, a subcarrier to be multiplied in the subcarrier multiplication unit 102-1 is $e^{j2\pi 0\Delta f(t-T/M)}$, a subcarrier to be multiplied in the subcarrier multiplication unit 102-2 is $e^{j2\pi 1\Delta f(t-T/M)}$, and a subcarrier to be multiplied in the subcarrier multiplication unit 102-N is $e^{j2\pi(N-1)\Delta f(t-T/M)}$. That is, the subcarrier multiplication unit 102-n generates a subcarrier-wise signal $x_{m(n-1)}(t)=X(m, n-1)u(t-mT/M)e^{j2\pi(N-1)\Delta f(t-mT/M)}$.

The frequency multiplexing unit 103 generates a signal $x_m(t)$ by summing the subcarrier-wise signals $x_{mn}(t)$ generated by the subcarrier multiplication units 102-1, ..., 102-N for n to perform frequency multiplexing of the signals. Although n ranges from 0 to N-1 in Eq. (1), n may start from a number other than 0 as long as there are N number of n. The same thing also applies to $\Sigma$ (summation) in other equations.

[Math. 1]

$$ x_m(t) \quad = \quad \sum_{n=0}^{N-1} X(m,n)u\left(t - m\frac{T}{M}\right) e^{j2\pi\frac{n}{NT}\left(t-m\frac{T}{M}\right)} \quad \cdots \quad (1) $$

The time multiplexing unit 104 generates a transmit signal x(t) shown in Eq. (2) by performing time multiplexing on $x_m(t)$ which is generated by the frequency multiplexing unit 103. This signal x(t) is a transmit signal of a frame in which $M\times N$ symbols X(m, n) are arranged.

[Math. 2]

$$ x(t) = \sum_{m=0}^{M-1} x_m(t) = \sum_{m=0}^{M-1}\sum_{n=0}^{N-1} X(m,n)u\left(t - m\frac{T}{M}\right) e^{j2\pi\frac{n}{NT}\left(t-m\frac{T}{M}\right)} \quad \cdots \quad (2) $$

The RF unit 105 up-converts the transmit signal x(t) to a radio frequency signal and wirelessly transmits the up-converted signal. Also, a CP addition unit may be provided between the time multiplexing unit 104 and the RF unit 105 to add a cyclic prefix (CP) to the transmit signal x(t).

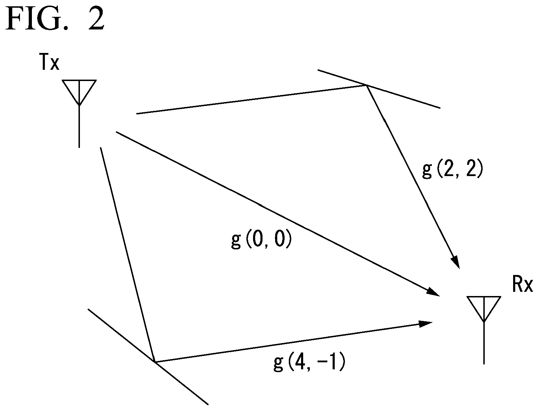

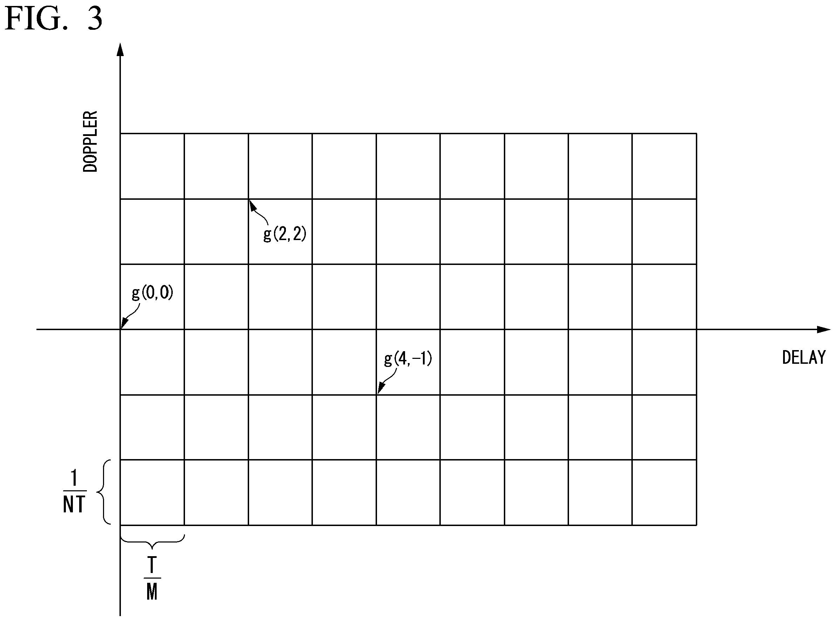

Next, channels in wireless communications will be described with reference to FIGS. 2 and 3. FIG. 2 is a schematic diagram for describing wireless communication channels in the present embodiment. In FIG. 2, there is a channel having three propagation paths g(0, 0), g(2, 2), and g(4, -1) between a transmitter Tx and a receiver Rx. In this case, as shown in FIG. 3, these three propagation paths g(0, 0), g(2, 2), and g(4, -1) can be mapped to a delay-Doppler domain having a Doppler axis and a delay axis. Because delay and Doppler values of the channel are small, the unit in the delay direction is T/M and the unit in the Doppler direction is 1/(NT) in the delay-Doppler domain of FIG. 3.

In orthogonal frequency division multiplexing (OFDM), although symbols are arranged in a time-frequency (TF) domain, a width in the time direction of the region where one symbol is placed is a reciprocal of the width in the frequency direction. Thus, the width in the frequency direction is increased when the width in the time direction is decreased and the width in the time direction is decreased when the width in the frequency direction is decreased. Thereby, the TF region where the individual symbols are placed is sufficiently large, and the transmit pulse corresponding to this TF region is a rectangular pulse that can be implemented. By using this rectangular pulse, OFDM is orthogonal with respect to both the frequency direction and the time direction.

However, because the unit in the delay direction (time direction) is T/M and the unit in the Doppler direction (frequency direction) is 1/(NT) in the delay-Doppler domain of FIG. 3, even symbols are placed in such small TF regions with these units as widths, it is difficult to generate an orthogonal signal in the delay-Doppler domain using a transmit pulse corresponding to the small TF region as that in OFDM. This is because a transmit pulse confining to the small TF region violates the uncertainty principle and does not exist. While the aforementioned rectangular transmit pulse is used in ODFM, a signal orthogonal to the Doppler direction (frequency direction) and the delay direction (time direction) is generated using the transmit pulse u(t) represented by Eq. (3) in the present embodiment.

[Math. 3]

$$u(t) = \sum_{\dot{n}=0}^{N-1} a(t - \dot{n}T) \quad \cdots \quad (3)$$

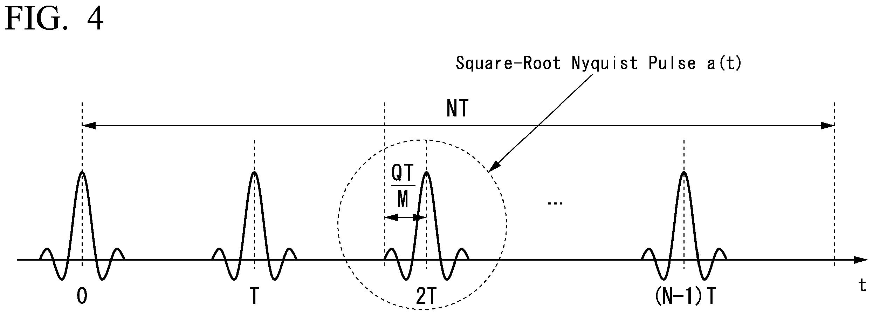

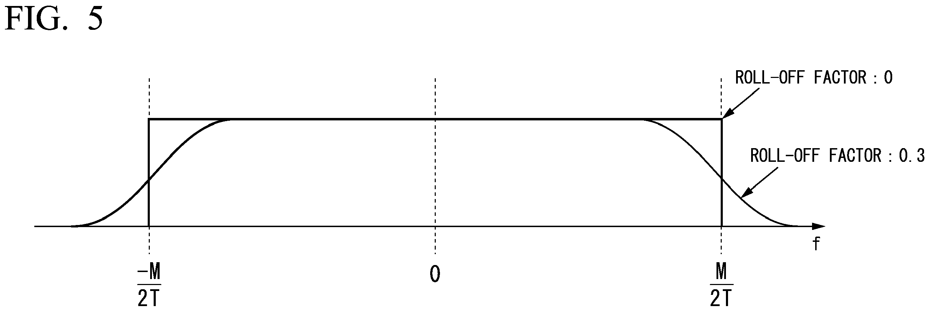

In Eq. (3), a(t) is a square-root Nyquist pulse corresponding to the Nyquist interval T/M and has a time duration of 2QT/M. Also, 2Q < M. Also, the energy of a(t) is 1/N without loss of generality. FIG. 4 is a graph illustrating the transmit pulse u(t) in the present embodiment. As shown in FIG. 4, Eq. (3) is a transmit pulse, in which N square-root Nyquist pulses corresponding to the Nyquist interval T/M are arranged one for each time interval T. Also, FIG. 5 is a graph showing the frequency response of the pulse a(t) in the present embodiment. In FIG. 5, the horizontal axis represents a frequency (Hz) and the center frequency is set to zero. Because the transmit pulse includes a square-root Nyquist pulse a(t) corresponding to the Nyquist interval T/M, its frequency response depends on the roll-off factor of the square-root Nyquist pulse, and its bandwidth is around M/T.

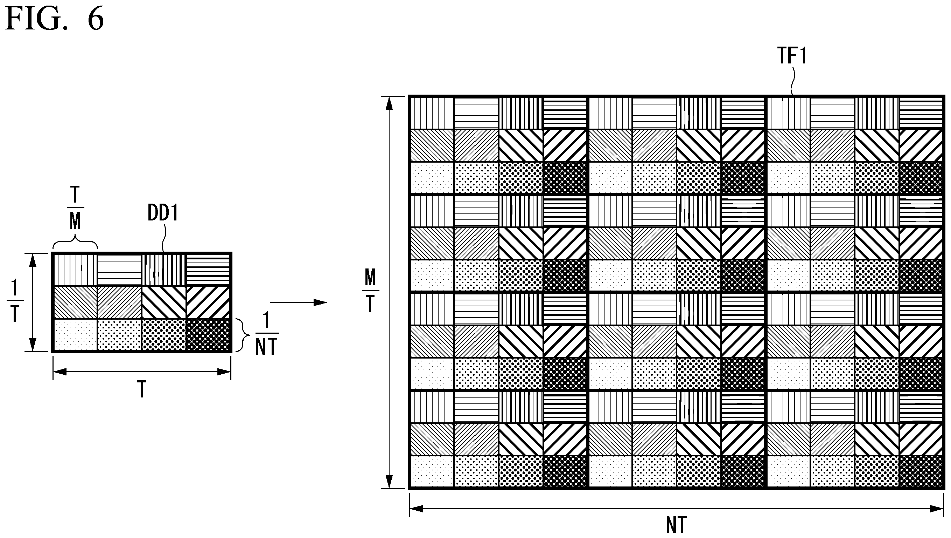

FIG. 6 is a schematic diagram showing the correspondence of symbols placement between the delay-Doppler domain and the TF domain. Here, FIG. 6 is a diagram for the case of 2Q < M, while M = 4 and N = 3 for simplifying the drawing. A region DD1 of the delay-Doppler domain is a region with the Doppler direction width (frequency direction) of 1/T and the delay direction (time direction) width of T, and is divided to segments with a width of 1/(NT) in the Doppler direction and a width of T/M in the delay direction. A signal corresponding to the symbol X(m, n) is placed in one of these segmented region. In FIG. 6, different hatching is applied to each region to indicate that signal corresponding to the symbol X(m, n) is placed in each region.

By applying the transmit pulse u(t) to signals X(m, n) placed in the region DD 1 of the delay-Doppler domain, signals corresponding to the symbols X(m, n) are distributed and mapped in a region TF 1 of the TF domain. That is, in the region TF 1 of the TF domain, signals corresponding to the same symbol X(m, n) are mapped N times at time intervals T and M times at frequency intervals 1/T. That is, the signal is orthogonal with respect to the Doppler direction and the delay direction.

Also, the fact that the pulses of symbols are orthogonal to each other can also be seen from the following equation that is an inner product of the pulse of a certain symbol and the pulse of a symbol placed at a position at a distance of mT/M in the Doppler direction and a distance of n/(NT) in the delay direction. Here, m is |m| ≤ M -2Q. Here, the following equation is based on the condition that M is larger than 2Q, and as shown in FIG. 6, a signal orthogonal to the Doppler direction and the delay direction is obtained when M is larger than 2Q. δ denotes a delta function.
[Math. 4]

$$
\begin{aligned}
A_u\left(m\frac{T}{M}, n\frac{1}{NT}\right) &= \int u(t)u(t - m\frac{T}{M})e^{-j\frac{2\pi n}{NT}(t - m\frac{T}{M})}dt, \\
&= \sum_{\dot{n}=0}^{N-1} \int_{\dot{n}T-\frac{QT}{M}}^{\dot{n}T+\frac{QT}{M}} a(t - \dot{n}T)a(t - \dot{n}T - m\frac{T}{M})e^{-j\frac{2\pi n}{NT}(t - m\frac{T}{M})}dt, \\
&= \sum_{\dot{n}=0}^{N-1} \int_{-\frac{QT}{M}}^{\frac{QT}{M}} a(\dot{\tau})a(\dot{\tau} - m\frac{T}{M})e^{-j\frac{2\pi n}{NT}(\dot{\tau} - m\frac{T}{M})}e^{-j\frac{2\pi n\dot{n}T}{NT}}d\dot{\tau}, \\
&= \sum_{\dot{n}=0}^{N-1} e^{-j\frac{2\pi n\dot{n}}{N}} \times \int_{-\frac{QT}{M}}^{\frac{QT}{M}} a(\dot{\tau})a(\dot{\tau} - m\frac{T}{M})e^{-j\frac{2\pi n}{NT}(\dot{\tau} - m\frac{T}{M})}d\dot{\tau}, \\
&= N\delta(n) \int_{-\frac{QT}{M}}^{\frac{QT}{M}} a(\dot{\tau})a(\dot{\tau} - m\frac{T}{M})d\dot{\tau}, \\
&= \delta(m)\delta(n) \quad\quad \cdots \quad\quad (4)
\end{aligned}
$$

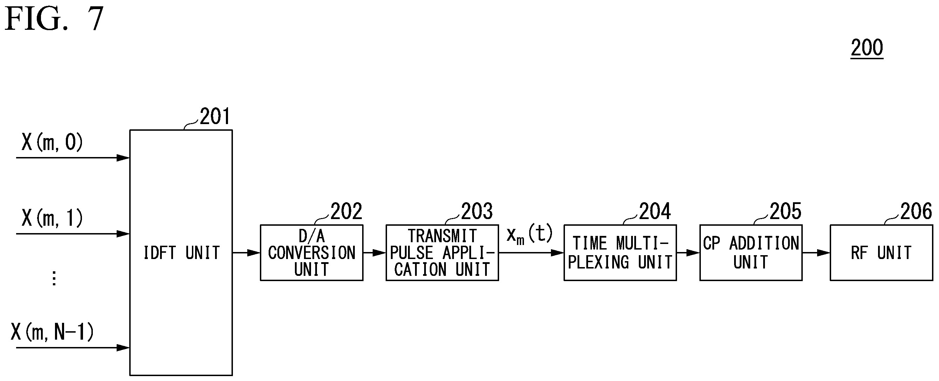

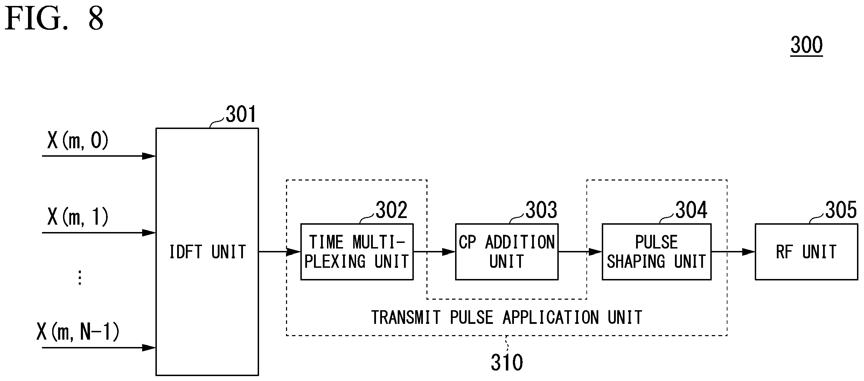

Although a transmit pulse is applied to each symbol in the transmitter 100 in FIG. 1, a signal in which the transmit pulse is applied to each symbol is obtained even the transmit pulse is applied after an inverse Fourier transform is performed and the frequency multiplexing is performed. In FIGS. 7 and 8, Examples 1 and 2 in which transmit pulses are applied after frequency multiplexing is performed are shown. FIG. 7 is a schematic block diagram showing a configuration of a transmitter 200 in Example 1. The transmitter 200 includes an inverse discrete Fourier transform (IDFT) unit 201, a digital/analog (D/A) conversion unit 202, a transmit pulse application unit 203, a time multiplexing unit 204, a CP addition unit 205, and an RF unit (transmission unit) 206.

The IDFT unit 201 performs an inverse Fourier transform on each set of N symbols (X(m, 0), X(m, 1), ..., X(m, N-1)) in the Doppler domain of the frame and generates a time-domain signal corresponding to each set. The D/A conversion unit 202 converts the time-domain signal generated by the IDFT unit 201 into an analog signal. The transmit pulse application unit 203 applies a transmit pulse u(t-mT/M) to the analog signal (the time-domain signal corresponding to each set) and generates a signal $x_m(t)$. This signal $x_m(t)$ is similar to the signal $x_m(t)$ generated by the frequency multiplexing unit 103 in FIG. 1.

The time multiplexing unit 204 generates the transmit signal x(t) of Eq. (2) by time-multiplexing the signal $x_m(t)$ generated by the transmit pulse application unit 203. This transmit signal x(t) is similar to the signal x(t) generated by the time multiplexing unit 104 in FIG. 1 and is a transmit signal of a frame in which M×N symbols X(m, n) are contained. The CP addition unit 205 adds a copy of the end of the transmit signal x(t) of the frame as a cyclic prefix (CP) to the beginning of x(t). The RF unit 206 up-converts the CP-added transmit signal x(t) to a radio frequency signal and wirelessly transmits the up-converted signal. In this way, the transmitter 200 in FIG. 7 can also transmit a transmit signal equivalent to that of the transmitter 100 in FIG. 1.

FIG. 8 is a schematic block diagram showing a configuration of a transmitter 300 in Example 2. The transmitter 300 includes an IDFT unit 301, a time multiplexing unit 302, a CP addition unit 303, a pulse shaping unit 304, and an RF unit (transmission unit) 305. In the present embodiment, the time multiplexing unit 302 and the pulse shaping unit 304 constitute a transmit pulse application unit 310. The IDFT unit 301 is similar to the IDFT unit 201 of FIG. 7 and generates a time-domain signal corresponding to each set of N symbols in the Doppler domain of the frame.

The time multiplexing unit 302 performs time multiplexing by arranging samples of the time-domain signals corresponding to the sets one by one with sample interval T/M so that the sets are interleaved. As a result, N samples constituting the time-domain signal corresponding to a certain set are arranged with time interval T. This time multiplexing corresponds to a process in which N pulses are arranged for each time interval T in the transmit pulse u(t).

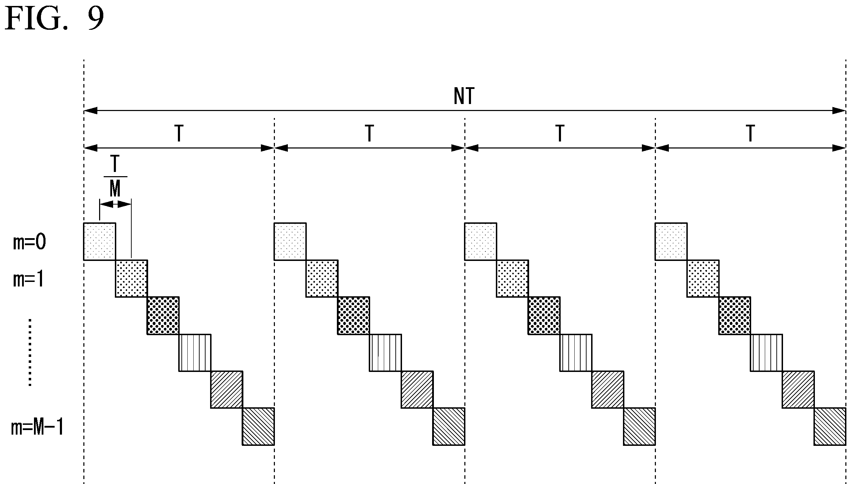

FIG. 9 is a schematic diagram for describing an operation of the time multiplexing unit 302. In FIG. 9, rectangles shown in the row of m = 0 are samples of the time-domain signal corresponding to the set of m = 0. Likewise, rectangles shown in the row of m = 1 are samples of the time-domain signal corresponding to the set of m = 1. The time multiplexing unit 302 arranges the samples in an order of the first sample of the time-domain signal corresponding to the set of m = 0, the first sample of the time-domain signal corresponding to the set of m = 1, ..., the first sample of the time-domain signal corresponding to the set of m = M-1, the second sample of the time-domain signal corresponding to the set of m = 0, the second sample of the time-domain signal corresponding to the set of m = 1, ..., the second sample of the time-domain signal corresponding to the set of m = M-1, ..., the $N^{th}$ sample of the time-domain signal corresponding to the set m = M-1 with sample interval T/M.

Returning to FIG. 8, the CP addition unit 303 adds a prescribed number of samples at the end of the samples arranged by the time multiplexing unit 302 as a cyclic prefix to the beginning of the samples. The pulse shaping unit 304 pulse-shapes each sample using a square-root Nyquist pulse corresponding to the Nyquist interval T/M and generates a transmit signal x(t). This pulse shaping corresponds to square-root Nyquist pulses corresponding to the Nyquist interval T/M in the transmit pulse u(t). Also, by pulse-shaping each sample using a square-root Nyquist pulse, the condition to obtain the transmit signal x(t) is 2Q << M. When 2Q << M, the width of the square-root Nyquist pulse is sufficiently small as compared to the wavelength of the carrier. Therefore, the change of the carrier component during one square-root Nyquist pulse is negligibly small. As a result, the transmit signal x(t) can be obtained by ignoring the change of the carrier component during the pulse width of the square-root Nyquist pulse and simply pulse-shaping each sample using the square-root Nyquist pulse.

The RF unit 305 up-converts the transmit signal x(t) to a radio frequency signal and wirelessly transmits the up-converted signal. In this way, the transmitter 300 in FIG. 8 can also transmit a transmit signal equivalent to those from the transmitter 200 in FIG. 7 and the transmitter 100 in FIG. 1. Although the pulse shaping is performed by the pulse shaping unit 304 after the time multiplexing process of the time multiplexing unit 302 in the aforementioned embodiment, the order may be exchanged. That is, after the pulse shaping process of the pulse shaping unit 304, the time multiplexing process of the time multiplexing unit 302 may be performed.

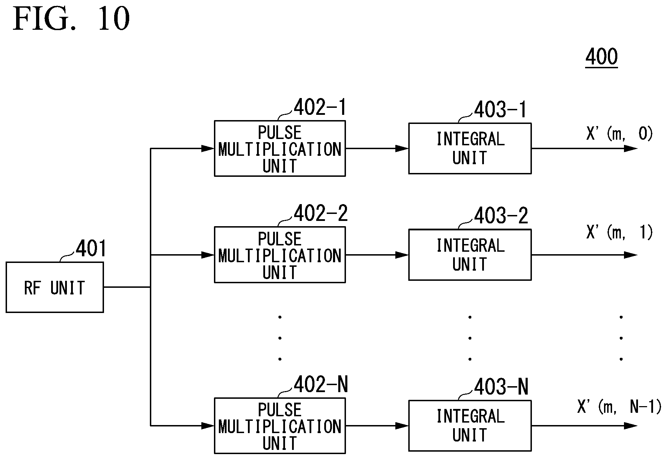

FIG. 10 is a schematic block diagram showing a configuration of a receiver 400 according to Example 3. The receiver 400 is used to receive signals transmitted by the transmitters 100, 200, and 300. The receiver 400 includes an RF unit (reception unit) 401, N pulse multiplication units 402-1, 402-2, ..., 403-N, and N integral units 403-1, 403-2, ..., 403-N.

The RF unit 401 receives radio signals transmitted by the transmitters 100, 200, and 300, i.e., signal frame in which M symbols are arranged in the delay direction and in each of which N symbols are arranged in the Doppler direction, and down-converts the radio signal into baseband signal. The pulse multiplication units 402-1, 402-2, ..., 402-N multiply the baseband signal by the conjugate of the transmit pulse multiplied by the subcarrier used at the transmitter. However, because u(t) is a real-valued function, its conjugate is u(t) itself.

That is, a signal to be multiplied in the pulse multiplication unit 402-1 is $u(t-mT/M)e^{-j2\pi 0 \Delta f(t-T/M)}$, a signal to be multiplied in the pulse multiplication unit 402-1 is $u(t-mT/M)e^{-j2\pi 1 \Delta f(t-mT/M)}$, and a signal to be multiplied in the pulse multiplication unit 402-N is u(t-mT/M)e$^{-j2\pi(N-1)\Delta f(t-mT/M)}$. That is, the pulse multiplication unit 402-n multiplies u(t-mT/M)e$^{-j2\pi(N-1)\Delta f(t-mT/M)}$.

The integral units 403-1, 403-2, ..., 403-N integrate multiplication results of the pulse multiplication units 402-1, 402-2, ..., 402-N over a time range of the transmit pulse used at the transmitter and obtain received symbols X'(m, 0), X'(m, 1), ..., X'(m, N-1).

In this receiver 400, the pulse multiplication units 402-1, 402-2, ..., 402-N and the integral units 403-1, 403-2, ..., 403-N constitute a matched filter unit. Also, this matched filter unit uses the pulse multiplication unit 402-n and the integral unit 403-n to multiply a baseband signal by a pulse, in which N square-root Nyquist pulses corresponding to the Nyquist interval T/M are arranged one for each time interval T, as a pulse similar to the transmit pulses u(t) of the transmitters 100, 200, and 300, and perform an integral process over the pulse width. In this way, the matched filter unit can obtain the received symbol X'(m, n) by applying a filter that matches the transmit pulse u(t). Although not shown here, received data can be obtained by performing an equalization process on the received symbol X'(m, n) in consideration of multipath.

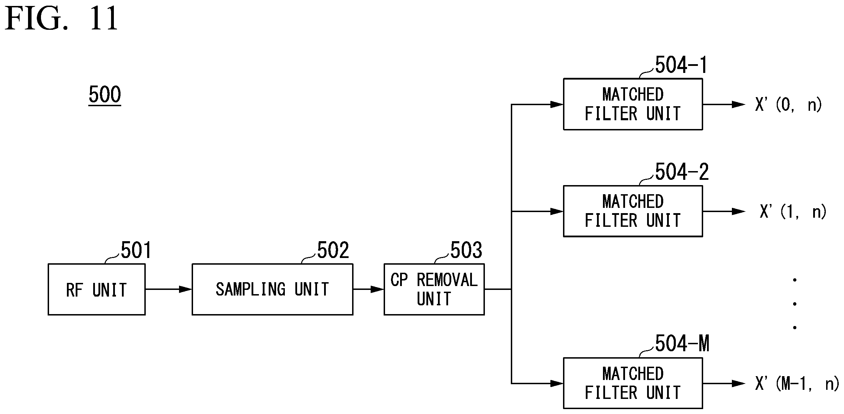

FIG. 11 is a schematic block diagram showing a configuration of a receiver 500 in Example 4. The receiver 500 is also used to receive signals transmitted by the transmitters 100, 200, and 300. The receiver 500 includes an RF unit (reception unit) 501, a sampling unit 502, a CP removal unit 503, and M matched filter units 504-1, 504-2, ..., 504-M.

The RF unit 501 receives radio signals transmitted by the transmitters 100, 200, and 300, i.e., signal frame in which M symbols are arranged in the delay direction and in each of which N symbols are arranged in the Doppler direction, and down-converts the radio signal into baseband signal. The sampling unit 502 samples the baseband signal at a sampling rate MK/T. Also, K is an oversampling coefficient greater than 1. The CP removal unit 503 removes a part corresponding to the cyclic prefix from the sampling result of the sampling unit 502.

The M matched filter units 504-1, 504-2, ..., 504-M apply a matched filter to the sampling result and obtain the received symbols X'(0, n), X'(1, n), ..., X'(M-1, n). Because the M matched filter units 504-1, 504-2, ..., 504-M have similar configurations, they will be referred to as a matched filter unit 504.

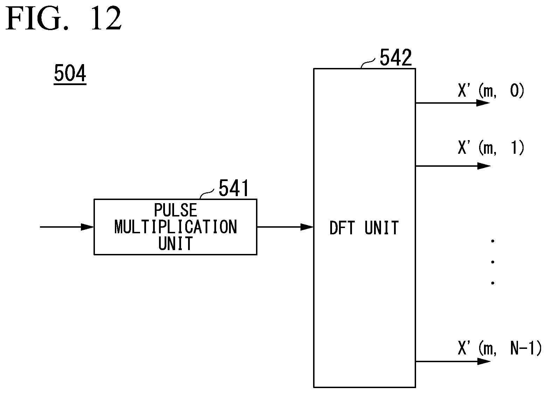

FIG. 12 is a schematic block diagram showing a configuration of the matched filter unit 504 in the present example. The matched filter unit 504 includes a pulse multiplication unit 541 and a discrete Fourier transform (DFT) unit 542. The pulse multiplication unit 541 multiplies a sampling result, from which the cyclic prefix has been removed, by a pulse similar to the transmit pulses u(t) of the transmitters 100, 200, and 300. Here, the transmit pulse u(t) is multiplied in the matched filter unit 504-1, the transmit pulse u(t-T/M) is multiplied in the matched filter unit 504-2, and the transmit pulse u(t-(M-1)T/M) is multiplied in the matched filter unit 504-M.

The DFT unit 542 performs an MNK-point discrete Fourier transform on a multiplication result of the pulse multiplication unit 541, where the first N outputs (outputs with n = 0, 1, ..., N-1) are treated as the received symbols X'(m, 0), X'(m, 1), ..., X'(m, N-1). Although the receiver 500 including the M matched filter units 504-1, 504-2, ..., 504-M has been described in FIG. 11, one matched filter unit 504 may be provided and the matched filter unit 504 may operate M times as the matched filter units 504-1, 504-2, ..., 504-M.

The matched filter unit 504 of the receiver 500 uses the pulse multiplication unit 541 and the DFT unit 542 to multiply a baseband signal by a pulse, in which N square-root Nyquist pulses corresponding to the Nyquist interval T/M are arranged one for each time interval T, as a pulse similar to the transmit pulses u(t) of the transmitters 100, 200, and 300 and perform an integral process over the pulse width. This is based on the fact that, for example, when the baseband signal of m = 0 is y$_0$(t), the left side defining the matched filtering can be approximated by the right side, which is the MNK-point discrete Fourier transform.

[Math. 5]

$$\int y_0(t)u(t)e^{-j2\pi \frac{n}{NT}t}dt \approx \frac{T}{MK}\sum_{k=0}^{MNK-1} y_0(k\frac{T}{MK})u(k\frac{T}{MK})e^{-j2\pi\frac{nk}{MNK}} \quad \cdots \quad (5)$$

In this way, the matched filter unit 504 can obtain the received symbol X'(m, n) by applying a filter that matches the transmit pulse u(t). Although not shown here, received data can be further obtained by performing an equalization process on the received symbol X'(m, n) in consideration of multipath.

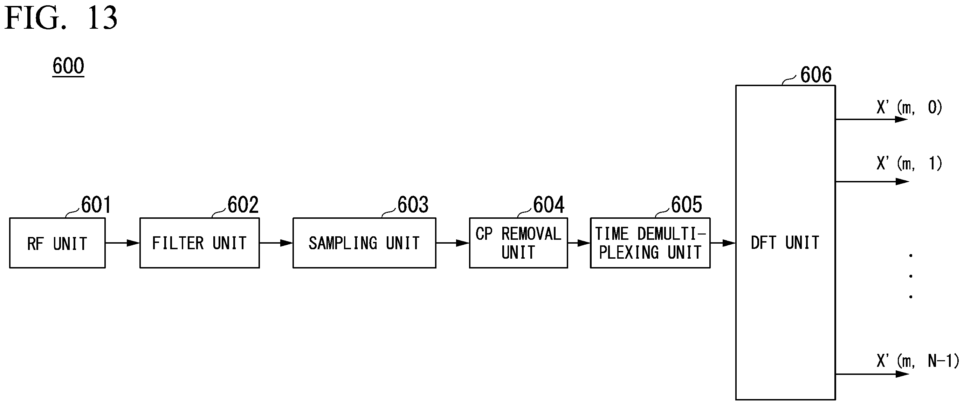

FIG. 13 is a schematic block diagram showing a configuration of a receiver 600 in Example 5. The receiver 600 is used to receive signals transmitted by the transmitters 100, 200, and 300. The receiver 600 includes an RF unit (reception unit) 601, a filter unit 602, a sampling unit 603, a CP removal unit 604, a time demultiplexing unit 605, and a DFT unit 606.

The RF unit 601 receives radio signals transmitted by the transmitters 100, 200, and 300, i.e., signal frame in which M symbols are arranged in the delay direction and in each of which N symbols are arranged in the Doppler direction, and down-converts the radio signal into baseband signal. The filter unit 602 filters the baseband signal using a filter whose impulse response is a(t) constituting a transmit pulse u(t), i.e., a square-root Nyquist pulse a(t) corresponding to the Nyquist interval T/M. The sampling unit 603 samples a filtered output at a sampling interval T/M. The CP removal unit 604 removes samples corresponding to a cyclic prefix from the samples sampled by the sampling unit 603. As a result, the CP removal unit 604 outputs M×N samples corresponding to the frame. The time demultiplexing unit 605 generates a set of N samples extracted per M samples from the samples corresponding to the frame output of the CP removal unit 604. For example, if an $m^{th}$ sample is y(m), the corresponding set consists of y(m), y(m+M), y(m+2M), ..., y(m+(N-1)×M). The DFT unit 606 obtains received symbols X'(m, 0), X'(m, 1), ..., X'(m, N-1) by performing an N-point discrete Fourier transform on the set generated by the time demultiplexing unit 605.

Although the filter unit 602 processes a baseband signal, which is an analog signal, a digital signal sampled at a sampling rate of MK/T (where K > 1), i.e., at a sampling interval T/(MK), may be processed. In this case, the sampling unit 603 performs down-sampling to the sampling rate M/T. Also, the down-sampling may be performed after a sample corresponding to the cyclic prefix is excluded by the CP removal unit 604.

In the receiver 600, the filter unit 602, the time demultiplexing unit 605, and the DFT unit 606 constitute a matched filter unit. Also, this matched filter unit uses the filter unit 602, the time demultiplexing unit 605, and the DFT unit 606 to multiply a baseband signal by a pulse, in which N square-root Nyquist pulses corresponding to the Nyquist interval T/M are arranged one for each time interval T, as a pulse similar to the transmit pulses u(t) of the transmitters 100, 200, and 300, and perform an integral process over the pulse width. In this way, the matched filter unit can obtain the received symbol X'(m, n) by applying a filter that matches the transmit pulse u(t). Although not shown here, received data can be obtained by performing an equalization process on the received symbol X'(m, n) in consideration of multipath.

Although a(t) constituting the transmit pulses u(t) of the transmitters 100, 200, and 300 has been described as a square-root Nyquist pulse corresponding to the Nyquist interval T/M in the present embodiment, a Nyquist pulse corresponding to the interval T/M can be used. That is, the transmit pulse u(t) is a transmit pulse, in which N square-root Nyquist pulses or Nyquist pulses corresponding to the Nyquist interval T/M are arranged one for each time interval T. This is because the square-root Nyquist pulse corresponding to the Nyquist interval T/M is substantially the Nyquist pulse corresponding to the Nyquist interval T/M if a roll-off factor is zero. In this regard, when the Nyquist pulse is used, the receiver becomes the receiver 600 from which the filter unit 602 may be excluded.

Also, the multiplications of the transmit pulse u(t-mT/M) in the transmit pulse application units 101-1, 101-2, ..., 101-N and the transmit pulse application unit 203 of the transmitter 200 can be processed using analog signals or digital signals. Also, the pulse shaping in the pulse shaping unit 304 of the transmitter 300 may be processed with an analog signal or a digital signal. Also, the multiplications in the pulse multiplication units 402-1, 402-2, ..., 402-N of the receiver 400 may be processed using analog signals or digital signals. In this regard, because the bandwidth of square-root Nyquist pulse a(t) is greater than or equal to MIT, a sampling rate thereof is set to MK/T (where K > 1) in accordance with the bandwidth of the square-root Nyquist pulse a(t), in case of processing with digital signals.

Also, because the inner product (ambiguity function) of a pulse of a certain symbol and a pulse of a symbol at a position at a distance of mT/M in the Doppler direction and a distance of n/(NT) in the delay direction is 6(m)6(n) if |m| ≤ M-2Q, it is shown that these pulses are orthogonal with each other in Eq. (4). When M-2Q < m ≤ M-1, because the aforementioned inner product becomes a value close to 0 as shown below, it can be said that they are substantially orthogonal. In case of -(M-1) ≤ m < -(M-2Q), because the values are also close to 0, it can be said that they are substantially orthogonal.

If m = m-M, the inner product can be modified as Eq. (6).

[Math. 6]

$$
\begin{aligned}
A_u\left(m\frac{T}{M}, n\frac{1}{NT}\right) &= \int u(t)u\left(t - m\frac{T}{M}\right) e^{-j\frac{2\pi n}{NT}\left(t - m\frac{T}{M}\right)} dt, \\
&\overset{(a)}{=} \sum_{\dot{n}=1}^{N-1} \int_{\dot{n}T - \frac{QT}{M}}^{\dot{n}T + \frac{QT}{M}} a(t - \dot{n}T)a\left(t + T - \dot{n}T - m\frac{T}{M}\right) e^{-j\frac{2\pi n}{NT}\left(t + T - m\frac{T}{M}\right)} dt, \\
&= \sum_{\dot{n}=1}^{N-1} \int_{\dot{n}T - \frac{QT}{M}}^{\dot{n}T + \frac{QT}{M}} a(t - \dot{n}T)a\left(t - \dot{n}T - \dot{m}\frac{T}{M}\right) e^{-j\frac{2\pi n}{NT}\left(t - \dot{m}\frac{T}{M}\right)} dt, \\
&= e^{j\frac{2\pi \dot{m} n}{MN}} \sum_{\dot{n}=1}^{N-1} e^{-j\frac{2\pi n \dot{n}}{N}} \times \int_{-\frac{QT}{M}}^{\frac{QT}{M}} a(\dot{\tau})a\left(\dot{\tau} - \dot{m}\frac{T}{M}\right) e^{-j\frac{2\pi n \dot{\tau}}{NT}} d\dot{\tau} \quad \cdots \quad (6)
\end{aligned}
$$

$(a)$

Also, $=$ in Eq. (6) is based on the fact that a(t-hT) and a(t-$\dot{n}$T-m×T/M) do not overlap in M-2Q < m≤ M-1, but a(t-$\dot{n}$T) and a(t+T-$\dot{n}$T-m×T/M) overlap. Also, n denotes n with a dot (·) above. If n = 0, Eq. (6) can be rewritten as Eq. (7).
[Math. 7]

$$A_u\left(m\frac{T}{M}, n\frac{1}{NT}\right) \;=\; (N-1)\times \int_{-\frac{QT}{M}}^{\frac{QT}{M}} a(\dot{\tau})a\left(\dot{\tau}-\dot{m}\frac{T}{M}\right)d\dot{\tau} = 0 \;\cdots\;(7)$$

When n ≠ 0, Eq. (8) is obtained and the value of the inner product becomes so small that it can be ignored.
[Math. 8]

$$A_u\left(m\frac{T}{M}, n\frac{1}{NT}\right) \;\approx\; -e^{j\frac{2\pi\dot{m}n}{MN}}\times \int_{-\frac{QT}{M}}^{\frac{QT}{M}} a(\dot{\tau})a\left(\dot{\tau}-\dot{m}\frac{T}{M}\right)d\dot{\tau} = 0 \;\cdots\;(8)$$

This is based on the following results.
[Math. 9]

$$e^{\frac{j2\pi n\dot{\tau}}{NT}} \approx 1 \quad \text{for} \quad \dot{\tau} \in \left(-\frac{QT}{M}, \frac{QT}{M}\right)$$

$$\sum_{\dot{n}=1}^{N-1} e^{-j\frac{2\pi n\dot{n}}{N}} \;=\; -1 \qquad \cdots \qquad\qquad (9)$$

Although the aforementioned transmitters 100, 200, and 300 include CP addition units such as the CP addition units 205 and 303 for adding cyclic prefixes to frames, a CPP addition unit configured to add a cyclic postfix as well as a cyclic prefix may be provided in place thereof. Also, when a cyclic prefix or a cyclic postfix is added before the square-root Nyquist pulse or the Nyquist pulse is applied, as in the transmitter 300, it is only necessary to copy symbols of the length to be added from the end or beginning of the frame and add the copied symbols.

As in the transmitters 100 and 200, when a cyclic prefix or a cyclic postfix is added after the square-root Nyquist pulse or the Nyquist pulse is applied, the samples for the pulses corresponding to the symbols copied by the transmitter 300 are copied from the end or beginning of the frame and added. This process may be performed before time multiplexing. For example, the CPP addition unit is placed between the frequency multiplexing unit 103 and the time multiplexing unit 104 in the transmitter 100, and the CPP addition unit is placed between the transmit pulse application unit 203 and the time multiplexing unit 204 in the transmitter 200. In these cases, for example, if the length of the cyclic prefix is LT/M, a part corresponding to the square-root Nyquist pulse or the Nyquist pulse at the end of the transmit pulse is copied and added to the beginning of transmit pulse for m = M-L to M-1. When the length of the cyclic postfix is KT/M, a part corresponding to the square-root Nyquist pulse or the Nyquist pulse at the beginning of the transmit pulse is copied and added to the end of transmit pulse for m = 0 to K-1.

As shown below, the length of each of the cyclic prefix and the cyclic postfix is preferably (2Q-1)T/M or more. Thereby, the transmit pulses can be orthogonal to each other. Also, when a channel delay is considered, it is desirable to lengthen the cyclic prefix by the considered channel delay.

A transmit pulse to which a cyclic prefix and a cyclic postfix are appended is represented by Eq. (10).
[Math. 10]

$$u_{cpp}(t) = \sum_{\dot{n}=-1}^{N} a(t - \dot{n}T) \qquad \cdots \qquad (10)$$

An inner product $A_u$(mT/M, n/NT) of a transmit pulse $u_{cpp}$(t) at m = 0 and n = 0 and a transmit (receive) pulse at a distance of mT/M in the delay direction and at a distance of n/(NT) in the Doppler direction is considered. The value of a(t) is 0 outside of -QT/M < t < QT/M, and Eq. (11) is obtained because 2Q < M. That is, it can be seen that they are orthogonal to each other. Also, even if 2Q ≥ M, the range of $\dot{n}$ in the summation of Eq. (10) is extended, for example, from -2 to N+1, therefore similarly they can be orthogonal to each other by lengthening the cyclic prefix and the cyclic postfix.

[Math. 11]

$$
\begin{aligned}
A_u\left(m\frac{T}{M}, n\frac{1}{NT}\right) &= \int u_{cpp}(t)u\left(t - m\frac{T}{M}\right)e^{-j\frac{2\pi n}{NT}(t-m\frac{T}{M})}dt, \\
&= \sum_{\dot{n}=0}^{N-1}\int_{\dot{n}T+m\frac{T}{M}-\frac{QT}{M}}^{\dot{n}T+m\frac{T}{M}+\frac{QT}{M}} u_{cpp}(t)a\left(t - \dot{n}T - m\frac{T}{M}\right)e^{-j\frac{2\pi n}{NT}(t-m\frac{T}{M})}dt, \\
&= \sum_{\dot{n}=0}^{N-1}\int_{-\frac{QT}{M}}^{\frac{QT}{M}} u_{cpp}\left(\tau + \dot{n}T + m\frac{T}{M}\right)a(\tau)e^{-j\frac{2\pi n}{NT}\tau}e^{-j\frac{2\pi n\dot{n}T}{NT}}d\tau, \\
&\overset{(b)}{=} \sum_{\dot{n}=0}^{N-1}e^{-j\frac{2\pi n\dot{n}}{N}} \times \int_{-\frac{QT}{M}}^{\frac{QT}{M}} u_{cpp}\left(\tau + m\frac{T}{M}\right)a(\tau)e^{-j\frac{2\pi n}{NT}\tau}d\tau, \\
&= \delta(n)\int_{-\frac{QT}{M}}^{\frac{QT}{M}} u_{cpp}\left(\tau + m\frac{T}{M}\right)a(\tau)d\tau, \\
&\overset{(c)}{=} \delta(n)\delta(m) \qquad \cdots \qquad (11)
\end{aligned}
$$

$\overset{(b)}{=}$ in Eq. (11) is based on the fact that Eq. (12) is valid for |m| ≤ M-1 and $\dot{n}$ = 0, ..., N-1 when |τ| ≤ QT/M. This is because $u_{cpp}(t)$ has a cyclic postfix if M-(2Q-1) ≤ m ≤ M-1, and $u_{cpp}(t)$ has a post prefix if -(M-1) ≤ m < -(M-(2Q-1)). Based on these results, it is desirable to have cyclic prefix and cyclic postfix with length of (2Q ≤ 1)T/M or more.

[Math. 12]

$$
u_{cpp}\left(\tau + \dot{n}T + m\frac{T}{M}\right) = u_{cpp}\left(\tau + m\frac{T}{M}\right) \qquad \cdots \qquad (12)
$$

$\overset{(c)}{=}$ in Eq. (11) is based on the fact that $u_{cpp}(t)$ is composed of time-shifted versions of a(t).

<Second embodiment>

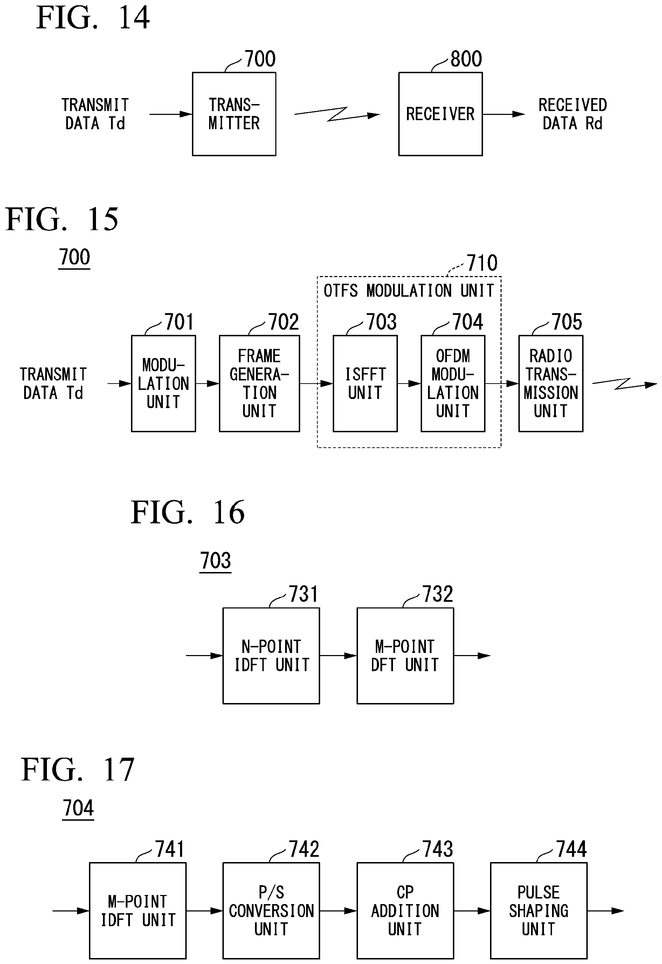

FIG. 14 is a schematic block diagram showing a configuration of a wireless communication system according to a second embodiment of the invention. The wireless communication system according to the present embodiment includes a transmitter 700 and a receiver 800. The transmitter 700 transmits a signal generated by performing orthogonal time frequency space (OTFS) modulation on transmit data Td. The receiver 800 receives and demodulates the signal transmitted by the transmitter 700 to obtain received data Rd.

FIG. 15 is a schematic block diagram showing a configuration of the transmitter 700 in the present embodiment. The transmitter 700 includes a modulation unit 701, a frame generation unit 702, an OTFS modulation unit 710, and a radio transmission unit 705. The modulation unit 701 generates a data symbol sequence by modulating a bit string constituting the transmit data Td, using a modulation scheme such as binary phase shift keying (BPSK), quadrature amplitude modulation (QAM), or 16QAM. The frame generation unit 702 generates a frame by arranging a symbol sequence obtained by adding known value symbols such as a pilot symbols to the data symbol sequence generated by the modulation unit 701 in a delay-Doppler shift domain (a delay-Doppler domain). This frame has M symbols in the direction of the delay axis (delay direction) and has in each of which N symbols in the direction of the Doppler shift axis (delay direction). Here, a symbol of a delay position m and a Doppler shift position (Doppler position) n constituting the frame is denoted by x[m, n]. Also, details of the frame configuration will be described below.

The OTFS modulation unit 710 performs OTFS modulation on a frame containing the transmit data Td (for example, a frame containing data symbols of the transmit data Td) to generate a transmit signal. The radio transmission unit 705 converts the transmit signal generated by the OTFS modulation unit 710 into an analog signal, further up-converts the analog signal to a radio frequency signal, and wirelessly transmits the up-converted signal.

Generally, OTFS modulation is performed by performing an inverse symplectic finite Fourier transform (ISFFT) to generate a frequency-time domain signal and OFDM modulation is further performed. Thus, the OTFS modulation unit 710 includes an ISFFT unit 120 and an OFDM modulation unit 130. The ISFFT unit 120 performs the ISFFT on the aforementioned frame to generate a frequency-time domain signal including N symbols in the time direction and in each of which M symbols in the frequency direction. The OFDM modulation unit 704 performs OFDM modulation on the frequency-time domain signal generated by the ISFFT unit 120 and generates a transmit signal.

Generally, in the OFDM modulation, in order to suppress out-of-band radiation due to signal discontinuity between OFDM symbols, windowing according to the OFDM symbol length is performed for pulse shaping when a transmit signal is generated. The OTFS modulation unit 710 (the OFDM modulation unit 130) of the present embodiment does not perform windowing according to the OFDM symbol length during the pulse shaping, when a transmit signal is generated.

FIG. 16 is a schematic block diagram showing a configuration of the ISFFT unit 703 in the present embodiment. The ISFFT unit 703 includes an N-point inverse discrete Fourier transform (IDFT) unit 731 and an M-point discrete Fourier transform (DFT) unit 732.

The N-point IDFT unit 731 performs an N-point inverse discrete Fourier transform on N symbols at delay positions m within the frame, i.e., N symbols arranged in the Doppler shift axis direction, (x[m, 0], ..., x[m, N-1]). Here, a result of performing an inverse discrete Fourier transform on x[m, 0], ..., x[m, N-1] is expressed as $x^I$[m, 0], ..., $x^I$[m, N-1]. The N-point IDFT unit 731 transforms the symbols x[m, n] (m = 0 to M-1 and n = 0 to N-1) within the frame and obtains samples $x^I$[m, t] (m= 0 to M-1 and t = 0 to N-1) (time-domain signals at delay positions m).

The M-point DFT unit 732 performs an M-point discrete Fourier transform on each sequence of samples $x^I$[m, t] for t (a sample sequence of $x^I$[0, t], ..., $x^I$[M-1, t]). Here, $x^I$[0, t], ..., $x^I$[M-1, t] are expressed as $x^{IF}$[0, t]. The M-point DFT unit 732 transforms samples $x^I$[m, t] (m = 0 to M-1, t = 0 to N-1) and obtains symbols $x^{IF}$[f, t] (f = 0 to M-1 and t = 0 to N-1). In this way, the M-point DFT unit 732 generates a frequency/time domain signal (symbols $x^{IF}$[f, t] (f = 0 to M-1 and t = 0 to N-1)) having M symbols in the frequency direction and N symbols in the time direction.

FIG. 17 is a schematic block diagram showing a configuration of the OFDM modulation unit 704 in the present embodiment. The OFDM modulation unit 704 includes an M-point IDFT unit 741, a parallel/serial (P/S) conversion unit 742, a cyclic prefix (CP) addition unit 743, and a pulse shaping unit 744.

The M-point IDFT unit 741 performs an M-point inverse discrete Fourier transform on the frequency/time domain signal generated by the ISFFT unit 703. For example, the M-point IDFT unit 741 performs an M-point inverse discrete Fourier transform on a sequence of frequency/time domain signals at time positions t (a symbol sequence of $x^{IF}$[0, t], ..., $x^{IF}$[M-1, t]). Here, a result of performing the inverse discrete Fourier transform on $x^{IF}$[0, t], ..., $x^{IF}$[M-1, t] is denoted by $x^{IFI}$[0, t], ..., $x^{IFI}$[M-1, t]. The M-point IDFT unit 741 transforms a symbol $x^{IF}$[f, t] (f = 0 to M-1 and t = 0 to N-1) and obtains a sample $x^{IFI}$[i, t] (i = 0 to M-1 and t = 0 to N-1). Also, symbols $x^{IF}$[f, t] (f = 0 to M-1 and t = 0 to N-1) are frequency-domain signals and samples $x^{IFI}$[i, t] (i = 0 to M-1 and t = 0 to N-1) are time-domain signals.

The P/S conversion unit 742 converts $x^{IF}$[0, t], ..., $x^{IF}$[M-1, t], which are a result of an inverse discrete Fourier transform of the M-point IDFT unit 741 according to a parallel/serial process to generate a serial signal. The CP addition unit 743 adds a CP to the serial signal generated by the P/S conversion unit 742. For example, for the CP added by the CP addition unit 743, L-1 copies of the end of the serial signal corresponding to the frame generated by the frame generation unit 702 are added to the beginning.

The pulse shaping unit 711 generates a root Nyquist pulse or a Nyquist pulse corresponding to each sample of the CP-added serial signal. Also, a sample interval of the Nyquist pulses or the root Nyquist pulse is T/M, where T denotes an OFDM symbol length of the OFDM modulation unit 704. A raised-cosine filter, for example, is used as a root Nyquist filter for generating the root Nyquist pulse. Also, a cardinal sine function (SINC) filter, for example, is used as a Nyquist filter for generating the Nyquist pulse. These filters have a bandwidth of M/T. Also, the pulse shaping unit 744 does not perform windowing according to the OFDM symbol length, which is performed in conventional OFDM modulation. Also, when the root Nyquist filter has been used in the pulse shaping unit 744 to satisfy the Nyquist condition in transmission and reception, the receiver 800 also uses the root Nyquist filter. In this way, inter-symbol interference is suppressed using the Nyquist filter or using the root Nyquist filter in transmitter and receiver to satisfy the Nyquist condition.

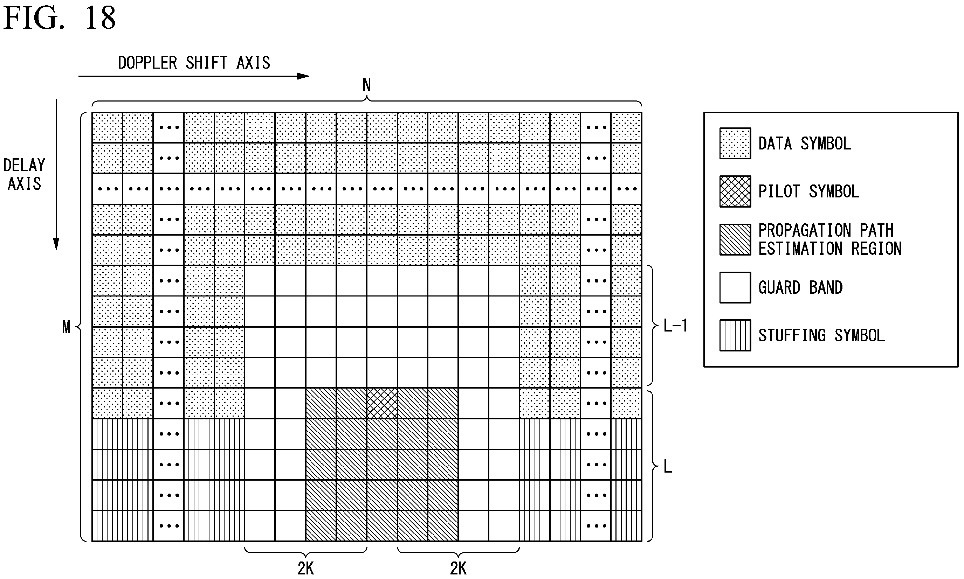

FIG. 18 is a schematic diagram showing a configuration example of a frame generated by the frame generation unit 702 in the present embodiment. In FIG. 18, the horizontal axis is the Doppler shift axis and the vertical axis is the delay axis. FIG. 18 shows one frame, which includes N symbols in the Doppler shift axis direction and M symbols in the delay axis direction. In FIG. 18, data symbols are data symbols generated by the modulation unit 701. The data symbols are arranged from delay positions 0 to M-L, except for a guard band to be described below. Other symbols are known value symbols whose symbol values are shared between the transmission side and the reception side. Therefore, known value symbols are arranged at delay positions M-L+1 to M-1 (the last L-1 rows in the delay axis direction).

A pilot symbol is a non-zero known value symbol used in propagation path estimation. In the present embodiment, the pilot symbol is arranged at a delay position M-L. Although only one pilot symbol is shown in FIG. 18, a plurality of pilot symbols may be included within one frame. For example, a plurality of pilot symbols may be arranged at intervals in the Doppler shift axis direction.

A propagation path estimation region is a region from delay positions M-L to M-1 and including 2K+1 elements in the Doppler direction surrounding the pilot symbol and is a region used for propagation path estimation on the receiver side. A symbol with a value of 0 is placed in this propagation path estimation region as a known value symbol. Here, K denotes a maximum compensation value of the Doppler shift in the positive and negative directions and L-1 is a maximum compensation value of the channel delay. Also, the Doppler shift axis represents a subcarrier interval of 1/(NT) and the delay axis represents a sampling interval of T/M. That is, the maximum compensation value of the Doppler shift is $\pm K/(NT)$ in terms of a frequency and the maximum compensation value of the delay is (L-1)T/M in terms of time.

The guard band is a region arranged outside of the propagation path estimation region so as to prevent data symbols and stuffing symbols from affecting the propagation path estimation region during propagation path estimation, and zero symbols are arranged here as known value symbols. The guard band includes L-1 front symbols in the delay direction of the propagation path estimation region and K outer symbols in the Doppler shift direction. The stuffing symbols are known value symbols arranged in a guard region of delay positions M-L+1 to M-1.

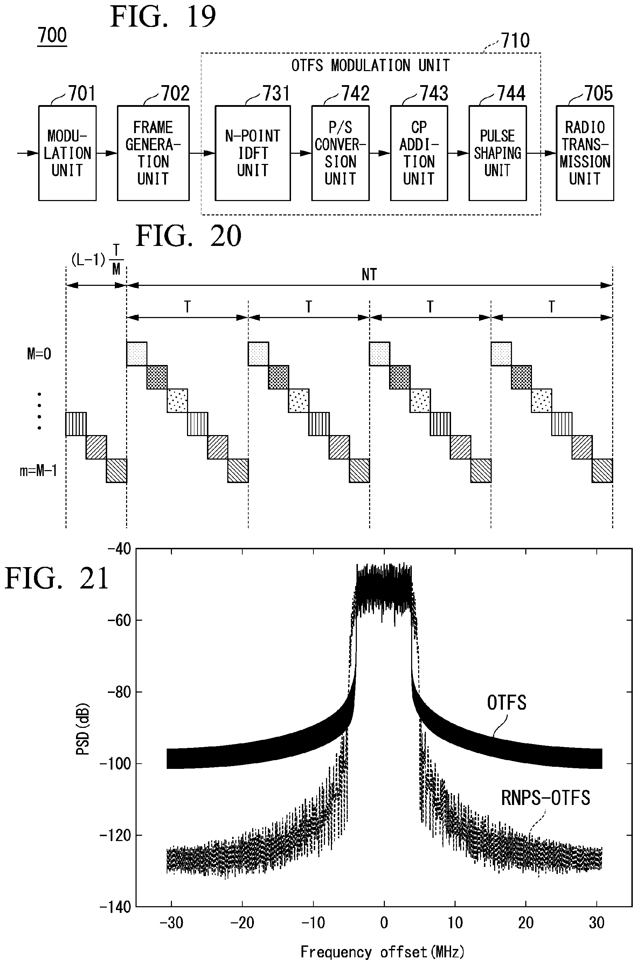

FIG. 19 is a schematic block diagram showing a configuration of the transmitter 700 according to a modified example of the present embodiment. Parts corresponding to those of FIGS. 15, 16, and 17 are denoted by the same reference numbers and description thereof will be omitted. The configuration of the transmitter 700 in FIG. 19 is different from the configuration according to FIG. 15 in that an OTFS modulation unit 710 includes an N-point IDFT unit 731, a P/S conversion unit 742, a CP addition unit 743, and a pulse shaping unit 744 without the ISFFT unit 703 and the OFDM modulation unit 704.

That is, in the transmitter 700 according to the present modified example, a calculation result of the N-point IDFT unit 731 is P/S-converted by the P/S conversion unit 742 and the M-point DFT unit 732 and the M-point IDFT unit 741 are not provided. This is because, even if these units are omitted, the processing result does not change. This is because the M-point inverse discrete Fourier transform in the M-point IDFT unit 741 is the inverse transform of the M-point discrete Fourier transform in the M-point DFT unit 732, i.e., because the M-point IDFT unit 741 performs a process of returning an output of the M-point DFT unit 732 to the output of the N-point IDFT unit 731.

Because of this configuration, the P/S conversion unit 742 performs a parallel/serial conversion process by regarding samples constituting the time-domain signal at each delay position, which are calculation results of the N-point IDFT unit 731, as M parallel samples in the delay direction.

FIG. 20 is a diagram schematically showing output examples of the CP addition unit 743 according to the present embodiment and the present modified example. To ease the description, M = 6, N = 4, and L = 4 are assumed here. In FIG. 20, each rectangle indicates one of samples $x^l[m, t]$ (m = 0 to M-1 and t = 0 to N-1). As described above, because the calculation result of the M-point IDFT unit 741 is the same as the calculation result of the N-point IDFT unit 731, the CP addition unit 743 adds a CP to a result of performing a P/S conversion process on the calculation result of the N-point IDFT unit 731 (samples $x^l[m, t]$ (m = 0 to M-1 and t = 0 to N-1)), and outputs a CP addition result.

Thus, three rectangles in a segment from the beginning to (L-1)T/M are $x^l[M-(L-1), N-1]$, $x^l[M-2, N-1]$, and $x^l[M-1, N-1]$. The subsequent frame of a length NT includes segments of N lengths T. The six rectangles in the segments of the lengths T at the beginning of the frame are $x'[0, 0]$, $x^l[1, 0]$, $x^l[2, 0]$, $x^l[3,0]$, $x^l[4, 0]$, and $x^l[M-1, 0]$. Furthermore, the following six rectangles of the lengths T are $x^l[0, 1]$, $x^l[1, 1]$, $x^l[2, 1]$, $x^l[3, 1]$, $x^l[4, 1]$, and $x^l[M-1, 1]$. Furthermore, the next six rectangles of the segments of the lengths T are $x^l[0, 2]$, $x^l[1, 2]$, $x^l[2, 2]$, $x^l[3, 2]$, $x^l[4, 2]$, and $x^l[M-1, 2]$.

Thus, for example, the rectangles in the top row (the row indicated by m = 0) are $x^l[0, 0]$, $x^l[0, 1]$, $x^l[0, 2]$, and $x^l[0, 3]$, which are results of performing the inverse discrete Fourier transform on the symbols x[0, 0], x[0, 1], x[0, 2], and x[0, 3] (N-subcarrier OFDM symbols). Also, the rectangles of the second row from the top (the row indicated by m = 1) are $x^l[1, 0]$, $x^l[1, 1]$, $x^l[1, 2]$, and $x^l[1, 3]$, which are results of performing the inverse discrete Fourier transform on the symbols x[1, 0], x[1, 1], x[1, 2], and x[1, 3] (N-subcarrier OFDM symbols).

Therefore, the output of the CP addition unit 743 can be regarded as time-multiplexed N-subcarrier OFDM symbols corresponding to delay positions m of the frame. Unlike conventional OFDM, because time multiplexing is performed for interval T/M, the severe discontinuity among OFDM symbol segments (segments each having a length T in FIG. 20) in the OFDM modulation unit 704 does not occur. Therefore, even the pulse shaping unit 744 performs rectangular windowing according to the OFDM symbol length (segment length T) of the OFDM modulation unit 704, which is performed in conventional OFDM modulation, no benefit can be obtained. For example, when rectangular windowing is performed, an increase in out-of-band radiation is caused. Also, windowing, namely arranging copies of samples in the OFDM symbol before and after the OFDM symbol segment and lowering the power of these copies, is performed to suppress discontinuity between OFDM symbols, thereby suppressing out-of-band radiation. However, in this case, the overhead is increased by the number of arranged copies of samples and the transmission efficiency is lowered.

FIG. 21 is a graph showing an example of a PSD distribution simulation result according to the present embodiment. The graph in FIG. 21 is a simulation result of a case where a carrier frequency is 5 GHz, a subcarrier interval is 15 kHz, M is 512, N is 64, a CP length is 5.4 μs, and a modulation scheme is 16QAM. In FIG. 21, the vertical axis represents a power spectral density (PSD) [dB] and the horizontal axis represents a frequency offset [MHz] from a carrier frequency.

The graph OTFS shows a PSD distribution of a case where windowing corresponding to the OFDM segment length is performed in the pulse shaping. The graph RNPS-OTFS shows a PSD distribution of a case of the present embodiment, i.e., a case where windowing corresponding to the OFDM segment length is not performed during the pulse shaping. Thus, in the case of the present embodiment and the present example in which windowing is not performed, out-of-band radiation can be reduced by as much as 20 dB as compared with the case where windowing has been performed.

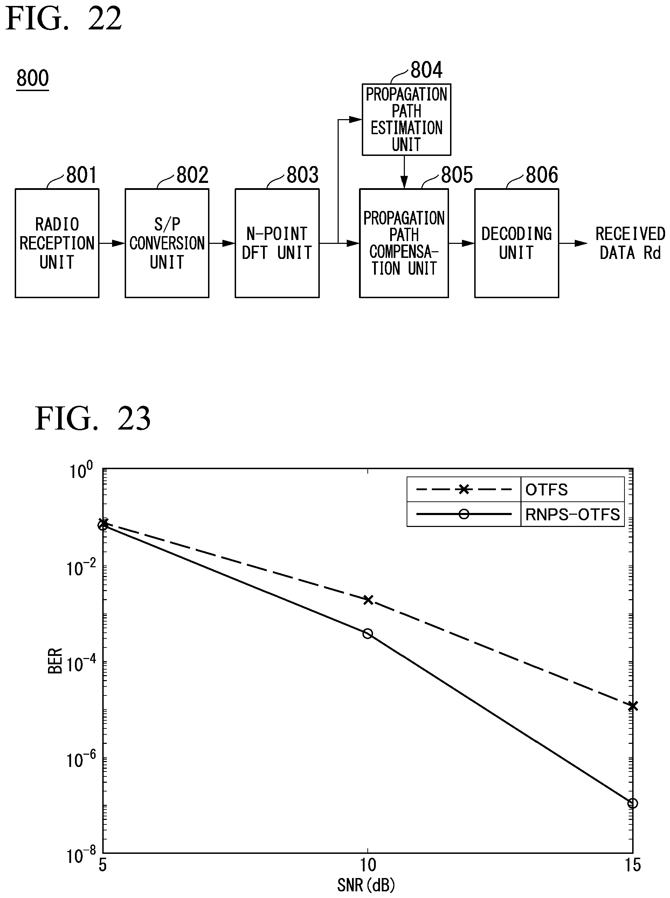

FIG. 22 is a schematic block diagram showing a configuration of the receiver 800 in the present embodiment. The receiver 800 includes a radio reception unit 801, an S/P conversion unit 802, an N-point DFT unit 803, a propagation path estimation unit 804, a propagation path compensation unit 805, and a decoding unit 806. The radio reception unit 801 receives a transmit signal wirelessly transmitted by the transmitter 700 and outputs the received signal including samples at sample interval T/M. When the pulse shaping unit 744 of the transmitter 700 uses a root Nyquist filter, the radio reception unit 801 also uses a root Nyquist filter to filter the received signal to satisfy the Nyquist condition. The S/P conversion unit 802 generates a sample sequence in which N samples output from the radio reception unit 801 are extracted per M samples.

Thereby, the S/P conversion unit 802 generates M sample sequences $Y_0$ to $Y_{M-1}$ for a received signal frame. Also, the sample sequence $Y_0$ includes samples of the beginning of the frame, i.e., samples of offset 0 from the beginning of the frame, and is a sequence of N samples extracted per M samples. The sample sequence $Y_1$ includes samples of offset 1 from the beginning of the frame and is a sample sequence including N samples extracted per M samples. Likewise, the sample sequence $Y_m$ includes N samples of offset m from the beginning of the frame, and is a sequence of N samples extracted per M samples. This S/P conversion unit 802 demultiplexes the time-multiplexed sample sequence from $Y_0$ to $Y_{M-1}$. Therefore, as described in the description of the pulse shaping unit 744, it is desirable to satisfy the Nyquist condition and suppress the inter-symbol interference.

The N-point DFT unit 803 performs an N-point discrete Fourier transform on each of the sample sequences $Y_0$, $Y_i$, ..., $Y_{M-1}$. Here, a result of performing the discrete Fourier transform on the sample sequence $Y_m$ is referred to as a symbol sequence $y_m$. The N-point DFT unit 803 transforms a sample sequence $Y_m$ (m = 0 to M-1) and obtains a symbol sequence $y_m$ (m = 0 to M-1). Also, the symbol sequence $y_m$ (m = 0 to M-1) is a frequency-domain signal and the sample sequence $Y_m$ (m = 0 to M-1) is a time-domain signal.

The propagation path estimation unit 804 detects a pilot symbol from the symbol sequence $y_m$ (m = 0 to M-1) and performs propagation path estimation. For example, the propagation path estimation unit 804 detects a pilot symbol in a propagation path estimation region shown in FIG. 18. Here, the pilot symbol detection result (gain) at each position (k, *l*) of the propagation path estimation region in the propagation path estimation unit 804 is denoted by g(k, *l*). Also, k denotes a Doppler shift position and takes values from -K to K, while *l* denotes a delay position and takes values from 0 to L-1.

The propagation path compensation unit 805 uses an estimation result from propagation path estimation unit 804 to perform propagation path compensation for symbol string $y_m$ (m = 0 to M-1) and calculate a symbol sequence $x_m$ (m = 0 to M-1). For example, the propagation path compensation unit 805 calculates the symbol sequence $x_m$ (m = 0 to M-1) by solving Eq. (13). Also, $C^k$ denotes a $k^{th}$ N×N cyclic permutation matrix C.

[Math. 13]

$$
\begin{bmatrix} \mathbf{y}_0 \\ \mathbf{y}_1 \\ \vdots \\ \mathbf{y}_{M-1} \end{bmatrix}
=
\begin{bmatrix} \mathbf{H}^0_{L-1} & \cdots & \mathbf{H}^0_0 & & & \mathbf{0} \\ & \ddots & \ddots & \ddots & & \\ & & \ddots & \ddots & \ddots & \\ \mathbf{0} & & & \mathbf{H}^{M-1}_{L-1} & \cdots & \mathbf{H}^{M-1}_0 \end{bmatrix}
\begin{bmatrix} \mathbf{D}\mathbf{x}_{M-L+1} \\ \vdots \\ \mathbf{D}\mathbf{x}_{M-1} \\ \mathbf{x}_0 \\ \vdots \\ \mathbf{x}_{M-L+1} \\ \vdots \\ \mathbf{x}_{M-1} \end{bmatrix}
$$

$$
=
\begin{bmatrix} \mathbf{H}^0_0 & & & & \mathbf{H}^0_{L-1}\mathbf{D} & \cdots & \cdots & \mathbf{H}^0_1\mathbf{D} \\ \vdots & \ddots & & & & \ddots & \ddots & \vdots \\ \vdots & \ddots & \ddots & & & & \ddots & \vdots \\ \mathbf{H}^{L-2}_{L-2} & \ddots & \ddots & \mathbf{H}^{L-2}_0 & & \mathbf{0} & & \mathbf{H}^{L-2}_{L-1}\mathbf{D} \\ \mathbf{H}^{L-1}_{L-1} & \ddots & \ddots & \ddots & \mathbf{H}^{L-1}_0 & & & \\ & \ddots & \ddots & \ddots & \ddots & \ddots & & \\ & & \ddots & \ddots & \ddots & \ddots & \ddots & \\ \mathbf{0} & & \mathbf{H}^{M-1}_{L-1} & & \ddots & \ddots & \ddots & \mathbf{H}^{M-1}_0 \end{bmatrix}
\begin{bmatrix} \mathbf{x}_0 \\ \vdots \\ \mathbf{x}_{M-L+1} \\ \vdots \\ \mathbf{x}_{M-1} \end{bmatrix}
$$

$$\cdots\cdots(13)$$

[Math. 14]

$$
H^{\mathrm{m}}_l = \sum_{k=1}^{2K+1} g(k,l) e^{j2\pi \frac{\hat{k}(m-l)}{MN}} C^{\hat{k}}
$$

$$\cdots\cdots(14)$$

$$
\hat{k} = k - K - 1
$$

$$
D = diag\left\{1, e^{-j\frac{2\pi}{N}}, \ldots, e^{-j\frac{2\pi(N-1)}{N}}\right\}
$$

Because the symbol sequence $x_m$ (m = 0 to M-1) is a symbol sequence (x[m, 0], ..., x[m, N-1] arranged by the frame generation unit 702 of the transmitter 700, the propagation path compensation unit 805 may solve Eq. (13) using a least squares method, a maximum likelihood estimation method, or the like.

Also, because the symbol sequence $x_m$ (m = M-L+1 to M-1) consists of known value symbols, the propagation path compensation unit 805 may sequentially calculate $x_m$ so that $x_0$ is obtained by inputting the symbol sequence $x_m$ (m = M-L+1 to M-1) to Eq. (13), and then $x_1$ is obtained by inputting the symbol sequence $x_m$ (m = M-L+2 to M-1 and 0) thereto. Furthermore, when $x_m$ is calculated in this way, the inputted symbol sequences $x_{m-L+1}$ to $x_{m-1}$ are symbol sequences obtained from a result of performing error correction in the decoding unit 806 on the calculation result of the propagation path compensation unit 805, based on an error correction code used as channel code. In this case, the transmitter 700 performs channel coding per symbol sequences $x_m$ (m = 0 to M-L) so that channel code of each symbol sequence $x_m$ (m = 0 to M-L) can be decoded.

The decoding unit 806 decodes a symbol sequence $x_m$ (m = 0 to M-L) calculated by the propagation path compensation unit 805 to calculate the received data Rd.

In this way, the S/P conversion unit 802 generates a sequence of N samples extracted per M samples from the output of the radio reception unit 801. The N-point DFT unit 803 performs an N-point discrete Fourier transform on each of the sample sequences $Y_0$, Yi, ..., $Y_{M-1}$. Thereby, it is possible to obtain the received symbols in the delay-Doppler shift space with a smaller amount of calculation than the inverse process of OTFS modulation. In particular, P/S conversion, an M-point DFT, an M-point IDFT, and an N-point DFT are required when the inverse process of OTFS modulation is performed.

Also, by using the known value symbols from the delay positions ML+1 to M-1 in the frame, the propagation path compensation can be performed sequentially for each delay position. Thereby, the amount of calculation in channel compensation can be suppressed.

FIG. 23 is a graph showing a result of simulating a bit error rate according to the present embodiment. The graph of FIG. 23 is a simulation result in which M is 512, N is 128, the modulation scheme is four-quadrature amplitude modulation (4QAM), the moving speed of the receiving end is 120 Km/h, and the channel is an extended vehicular A (EVA) channel. In FIG. 23, the vertical axis represents a bit error rate (BER) and the horizontal axis represents an SN ratio (a signal to noise ratio (SNR)). A graph OTFS indicates the bit error rate, when windowing corresponding to the OFDM unit length is performed during pulse shaping. A graph RNPS-OTFS shows the bit error rates in the case of the present embodiment and the present example, i.e., when windowing corresponding to the OFDM segment length is not performed during pulse shaping. Thus, in the case of the present embodiment and the present example where windowing is not performed, a better bit error rate can be obtained than the case of windowing.

Also, the present invention can also be represented as follows.

(1) According to an aspect of the present invention, there is provided a transmitter including: a transmission unit configured to transmit a frame in which M symbols are arranged in the delay direction and in each of which N symbols are arranged in the Doppler direction; and a transmit pulse application unit configured to apply a transmit pulse, in which N square-root Nyquist pulses or Nyquist pulses corresponding to a Nyquist interval T/M are arranged one for each time interval T, to the symbols.

(2) According to another aspect of the present invention, in the aforementioned transmitter, the transmission unit includes an inverse Fourier transform unit configured to generate a time-domain signals each corresponding to a set of N symbols in a Doppler domain of the frame by performing an inverse Fourier transform on theset, the transmit pulse application unit applies a transmit pulse to time-domain signals corresponding to the sets, and the transmit pulse application unit applies the transmit pulse to each of the time-domain signals corresponding to the set, and the transmission unit includes a time multiplexing unit configured to perform time multiplexing of the time-domain signals, which has been applied with the transmit pulse.

(3) According to yet another aspect of the present invention, in the aforementioned transmitter, the transmission unit includes an inverse Fourier transform unit configured to generate time-domain signals each corresponding to a set of the N symbols in a Doppler domain of the frame by performing an inverse Fourier transform on the set, the transmit pulse application unit performs pulse shaping of the square-root Nyquist pulses or the Nyquist pulses corresponding to the Nyquist interval T/M after performing time multiplexing of the time-domain signals each corresponding to the set, and the time multiplexing of the time-domain signals each corresponding to a set is performed by arranging samples of the time-domain signals each corresponding to a set one by one with sample interval T/M so that the sets are interleaved.

(4) According to yet another aspect of the present invention, the transmitter includes a CP addition unit configured to add a cyclic prefix to the frame or a CPP addition unit configured to add a cyclic prefix and a cyclic postfix to the frame.

(5) According to yet another aspect of the present invention, there is provided a transmission method including steps of: transmitting a frame in which M symbols are arranged in a delay direction and in each of which N symbols are arranged in a Doppler direction; and applying a transmit pulse, in which N square-root Nyquist pulses or Nyquist pulses corresponding to a Nyquist interval T/M are arranged one for each time interval T, to the frame.

(6) According to yet another aspect of the present invention, there is provided a receiver including: a reception unit configured to receive a signal frame in which M symbols are arranged in the delay direction and in each of which N symbols are arranged in the Doppler direction; and a matched filter unit configured to multiply the signal by a pulse, in which N square-root Nyquist pulses corresponding to a Nyquist interval T/M are arranged one for each interval T, and perform an integral process over a width of the pulse.

(7) According to yet another aspect of the present invention, there is provided a reception method including steps of: receiving a signal frame in which M symbols are arranged in a delay direction and in each of which N symbols are arranged in a Doppler direction; and multiplying the signal by a pulse, in which N square-root Nyquist pulses corresponding to a Nyquist interval T/M are arranged one for each time interval T, and performing an integral process over a width of the pulse.

(8) According to yet another aspect of the present invention, there is provided a transmitter including: an orthogonal time frequency space (OTFS) modulation unit configured to generate a transmit signal by performing OTFS modulation on a frame containing transmission data, the frame being a frame in which M symbols are arranged in a delay direction and in each of which N symbols are arranged in a Doppler direction; and a transmission unit configured to transmit the transmit signal, wherein the OTFS modulation unit includes a root Nyquist filter or a Nyquist filter for pulse shaping for generation of the transmit signal, and further does not perform windowing corresponding to an orthogonal frequency division multiplexing (OFDM) symbol length during pulse shaping for generation of the transmit signal.

(9) According to yet another aspect of the present invention, in the aforementioned transmitter, the OTFS modulation unit includes an inverse discrete Fourier transform unit configured to generate a time-domain signal of each delay position by performing an inverse discrete Fourier transform on N symbols at each delay position within the frame and a P/S conversion unit configured to perform parallel/serial conversion by regarding samples constituting the time-domain signal as M parallel samples in the delay direction.

(10) According to yet another aspect of the present invention, in the aforementioned transmitter, last L-1 rows in the delay direction within a frame arranged in a delay-Doppler domain to be OTFS-modulated by the OTFS modulation unit are known value symbols, and a maximum compensation value for channel delay is obtained by multiplying a sample interval by L-1.

(11) According to yet another aspect of the present invention, there is provided a receiver for receiving a frame in which a width in a delay direction is M and a width in a Doppler direction is N, the receiver including: an S/P conversion unit configured to generate a sequence of N samples extracted per M samples from a received signal; and a discrete Fourier transform unit configured to perform a discrete Fourier transform on each sample sequence.

(12) According to yet another aspect of the present invention, in the above-described receiver, symbols of delay positions M-L+1 to M-1 within the frame are known value symbols, and the receiver comprises a propagation path compensation unit configured to perform propagation path compensation using the known value symbols.

(13) According to yet another aspect of the present invention, in the above-described receiver, a root Nyquist filter is applied to the received signal.

(14) According to yet another aspect of the present invention, there is a transmission method for use in a transmitter, the transmission method including: a first step of generating a transmit signal by performing orthogonal time frequency space (OTFS) modulation on a frame containing transmission data, the frame being a frame in which M symbols are arranged in a delay direction and in each of which N symbols are arranged in a Doppler direction; and a second step of transmitting the transmit signal, wherein, in the first step, the transmit signal is generated using a root Nyquist filter or a Nyquist filter in pulse shaping for generation of the transmit signal, and windowing corresponding to an orthogonal frequency division multiplexing (OFDM) symbol length is not performed during pulse shaping for generation of the transmit signal.

(15) According to yet another aspect of the present invention, there is provided a reception method for use in a receiver for receiving a frame in which a width in a delay direction is M and a width in a Doppler direction is N, the reception method including: a first step of generating a sequence of N samples extracted per M samples from a received signal; and a second step of performing a discrete Fourier transform on each sample sequence.

Although wireless communication has been described as an example in each of the aforementioned embodiments, communication using another medium such as optical communication may also be used.

Also, the functional blocks of the transmitters 100, 200, and 300, the receivers 400, 500, and 600 in FIGS. 1, 7, 8, 10, 11, and 13 described above may be individually chipped or some or all of the functional blocks may be integrated and chipped.

Also, a method of integrated circuit is not limited to an LSI circuit, but may be implemented with dedicated circuits or general-purpose processors. It can be either hybrid or monolithic. Some functions may be implemented by hardware and some functions may be implemented by software.

Also, in the case where the integrated circuit technology which is substituted for an LSI circuit appears due to the advance of the semiconductor technology, an integrated circuit based on the technology may be used.

Although embodiments of the present invention have been described above in detail with reference to the drawings, specific configurations are not limited to the embodiments and design changes and the like may also be included without departing from the spirit and scope of the present invention.

[Reference Signs List]

100, 200, 300, 700 Transmitter
101-1, 101-2, 101-N, 203, 310 Transmit pulse application unit
102-1, 102-2, 102-N Subcarrier multiplication unit
103 Frequency multiplexing unit
104, 204, 302 Time multiplexing unit
105, 206, 305 RF unit
201, 301 IDFT unit
202 D/A conversion unit
205, 303 CP addition unit
304 Pulse shaping unit
400, 500, 600, 800 Receiver
401, 501, 601 RF unit
402-1, 402-2, 402-N, 541 Pulse multiplication unit
403-1, 403-2, 403-N Integral unit
502, 603 Sampling unit
503, 604 CP removal unit
504-1, 504-2, 504-N Matched filter unit
541 Pulse multiplication unit
542, 606 DFT unit
602 Filter unit
605 Time demultiplexing unit
701 Modulation unit
702 Frame generation unit
703 ISFFT unit
704 OFDM modulation unit
705 Radio transmission unit
710 OTFS modulation unit
731 N-Point IDFT unit
732 M-Point DFT unit
741 M-Point IDFT unit
742 P/S conversion unit
743 CP addition unit
744 Pulse shaping unit
801 Radio reception unit
802 S/P conversion unit
803 N-Point DFT unit
804 Propagation path estimation unit
805 Propagation path compensation unit
806 Decoding unit

**Claims**

**1.** A transmitter comprising:

a transmission unit configured to transmit a frame in which M symbols are arranged in a delay direction and in each of which N symbols are arranged in a Doppler direction; and
a transmit pulse application unit configured to apply a transmit pulse, in which N square-root Nyquist pulses or Nyquist pulses corresponding to a Nyquist interval T/M are arranged one for each time interval T, to each of the symbols.

**2.** The transmitter according to claim 1,

wherein the transmission unit includes an inverse Fourier transform unit configured to generate time-domain signals each corresponding to a set of N symbols in a Doppler domain of the frame by performing an inverse Fourier transform on the set,

wherein the transmit pulse application unit applies the transmit pulse to each of the time-domain signals corresponding to the set, and

wherein the transmission unit includes a time multiplexing unit configured to perform time multiplexing of the time-domain signals, which has been applied with the transmit pulse.

3. The transmitter according to claim 1,

wherein the transmission unit includes an inverse Fourier transform unit configured to generate time-domain signals each corresponding to a set of the N symbols in a Doppler domain of the frame by performing an inverse Fourier transform on the set,

wherein the transmit pulse application unit performs pulse shaping of the square-root Nyquist pulses or the Nyquist pulses corresponding to the Nyquist interval T/M after performing time multiplexing of the time-domain signals each corresponding to the set, and

wherein the time multiplexing of the time-domain signals each corresponding to a set is performed by arranging samples of the time-domain signals each corresponding to a set one by one with sample interval T/M so that the sets are interleaved.

4. The transmitter according to claim 1, comprising a CP addition unit configured to add a cyclic prefix to the frame or a CPP addition unit configured to add a cyclic prefix and a cyclic postfix to the frame.

5. A transmission method comprising steps of:

transmitting a frame in which M symbols are arranged in a delay direction and in each of which N symbols are arranged in a Doppler direction; and

applying a transmit pulse, in which N square-root Nyquist pulses or Nyquist pulses corresponding to a Nyquist interval T/M are arranged one for each time interval T, to the frame.

6. A receiver comprising:

a reception unit configured to receive a signal frame in which M symbols are arranged in a delay direction and in each of which N symbols are arranged in a Doppler direction; and

a matched filter unit configured to multiply the signal by a pulse, in which N square-root Nyquist pulses corresponding to a Nyquist interval T/M are arranged one for each interval T, and perform an integral process over a width of the pulse.

7. A reception method comprising steps of:

receiving a signal frame in which M symbols are arranged in a delay direction and in each of which N symbols are arranged in a Doppler direction; and

multiplying the signal by a pulse, in which N square-root Nyquist pulses corresponding to a Nyquist interval T/M are arranged one for each time interval T, and performing an integral process over a width of the pulse.

8. The transmitter according to claim 1,

wherein the transmission unit includes an orthogonal time frequency space (OTFS) modulation unit configured to generate a transmit signal by performing OTFS modulation on the frame containing transmission data, and

wherein the OTFS modulation unit includes

an inverse discrete Fourier transform unit configured to generate a time-domain signal of each delay position by performing an inverse discrete Fourier transform on N symbols at each delay position within the frame; and

a P/S conversion unit configured to perform parallel/serial conversion by regarding samples constituting the time-domain signal as M parallel samples in the delay direction.

9. The transmitter according to claim 1,

wherein the transmission unit includes an OTFS modulation unit configured to generate a transmit signal by performing OTFS modulation on the frame containing transmission data, and

wherein last L-1 rows in the delay direction within a frame arranged in a delay-Doppler domain to be OTFS-modulated by the OTFS modulation unit are known value symbols, and a maximum compensation value for channel delay is obtained by multiplying a sample interval by L-1.

10. A receiver for receiving a frame in which a width in a delay direction is M and a width in a Doppler direction is N, the receiver comprising:

an S/P conversion unit configured to generate sample sequences each including N samples extracted per M samples from a received signal; and
a discrete Fourier transform unit configured to perform a discrete Fourier transform on each of the sample sequences.

11. The receiver according to claim 10,

wherein symbols of delay positions M-L+1 to M-1 within the frame are known value symbols, and
wherein the receiver comprises a propagation path compensation unit configured to perform propagation path compensation using the known value symbols.

12. The receiver according to claim 10, wherein a root Nyquist filter is applied to the received signal.

13. A reception method for use in a receiver for receiving a frame in which a width in a delay direction is M and a width in a Doppler direction is N, the reception method comprising:

a first step of generating sample sequences each including N samples extracted per M samples from a received signal; and
a second step of performing a discrete Fourier transform on each of the sample sequences.

FIG. 1

FIG. 1

FIG. 2

FIG. 3

# FIG. 4

Square-Root Nyquist Pulse $a(t)$

$NT$

$\dfrac{QT}{M}$

$0$  $T$  $2T$  $\cdots$  $(N-1)T$

$t$

EP 4 311 137 A1

FIG. 5

FIG. 6

EP 4 311 137 A1

FIG. 7

200

$X(m, 0)$ →
$X(m, 1)$ →
⋮
$X(m, N-1)$ →
IDFT UNIT (201)
→ D/A CONVERSION UNIT (202)
→ TRANSMIT PULSE APPLICATION UNIT (203)
→ $x_m(t)$ → TIME MULTIPLEXING UNIT (204)
→ CP ADDITION UNIT (205)
→ RF UNIT (206)

EP 4 311 137 A1

EP 4 311 137 A1

FIG. 8

FIG. 9

FIG. 10

# FIG. 11

500

| | | |
|---|---|---|
| RF UNIT (501) | → SAMPLING UNIT (502) | → CP REMOVAL UNIT (503) |

MATCHED FILTER UNIT — 504-1 → X' (0, n)

MATCHED FILTER UNIT — 504-2 → X' (1, n)

MATCHED FILTER UNIT — 504-M → X' (M-1, n)

EP 4 311 137 A1

FIG. 12

504

541

PULSE
MULTIPLICATION
UNIT

542

DFT UNIT

X' (m, 0)

X' (m, 1)

·
·
·

X' (m, N-1)

# FIG. 13

<u>600</u>

RF UNIT (601) → FILTER UNIT (602) → SAMPLING UNIT (603) → CP REMOVAL UNIT (604) → TIME DEMULTI-PLEXING UNIT (605) → DFT UNIT (606)

DFT UNIT outputs: $X'(m, 0)$, $X'(m, 1)$, ⋮, $X'(m, N-1)$

EP 4 311 137 A1

FIG. 14

TRANSMIT
DATA Td → **700** TRANS-MITTER ⟿ **800** RECEIVER → RECEIVED DATA Rd

FIG. 15

**700**

OTFS MODULATION UNIT **710**

TRANSMIT
DATA Td → **701** MODU-LATION UNIT → **702** FRAME GENERA-TION UNIT → **703** ISFFT UNIT → **704** OFDM MODU-LATION UNIT → **705** RADIO TRANS-MISSION UNIT ⟿

FIG. 16

**703**

→ **731** N-POINT IDFT UNIT → **732** M-POINT DFT UNIT →

FIG. 17

**704**

→ **741** M-POINT IDFT UNIT → **742** P/S CONVERSION UNIT → **743** CP ADDITION UNIT → **744** PULSE SHAPING UNIT →

FIG. 18

## FIG. 19

700

701 MODULATION UNIT

702 FRAME GENERATION UNIT

710 OTFS MODULATION UNIT

731 N-POINT IDFT UNIT

742 P/S CONVERSION UNIT

743 CP ADDITION UNIT

744 PULSE SHAPING UNIT

705 RADIO TRANSMISSION UNIT

## FIG. 20

$(L-1)\frac{T}{M}$

NT

T   T   T   T

M=0

m=M−1

## FIG. 21

FIG. 22

<u>800</u>

```
                                              ┌─804
                                        ┌──────────────┐
                                        │ PROPAGATION  │
                                        │    PATH      │
                                        │  ESTIMATION  │
                                        │    UNIT      │
                                        └──────┬───────┘
   ┌─801        ┌─802        ┌─803             │  ┌─805       ┌─806
┌─────────┐  ┌─────────┐  ┌─────────┐  ┌──────────────┐  ┌─────────┐
│ RADIO   │  │  S/P    │  │ N-POINT │  │ PROPAGATION  │  │DECODING │      RECEIVED
│RECEPTION│─▶│CONVERSION│─▶│ DFT UNIT│─▶│    PATH      │─▶│  UNIT   │─────▶ DATA Rd
│  UNIT   │  │  UNIT   │  │         │  │ COMPENSA-    │  │         │
└─────────┘  └─────────┘  └─────────┘  │ TION UNIT    │  └─────────┘
                                        └──────────────┘
```

FIG. 23

<div align="center">

**INTERNATIONAL SEARCH REPORT**

</div>

| International application No. |
|---|
| **PCT/JP2022/011241** |

| A. | CLASSIFICATION OF SUBJECT MATTER |
|---|---|

*H04J 11/00*(2006.01)i; *H04L 27/26*(2006.01)i
FI: H04J11/00; H04L27/26 310; H04L27/26 410

According to International Patent Classification (IPC) or to both national classification and IPC

| B. | FIELDS SEARCHED |
|---|---|

Minimum documentation searched (classification system followed by classification symbols)

H04J11/00; H04L27/26

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | US 2017/0244524 A1 (COHERE TECHNOLOGIES, INC.) 24 August 2017 (2017-08-24) paragraphs [0074]-[0090], fig. 3B, 3C, 4-5 | 1-8, 10-13 |
| A | | 9 |
| T | 林 海, 6Gのための遅延ドップラー平面マルチキャリア変調, 電子情報通信学会2021年通信ソサイエティ大会講演論文集1 BS-3-1, 31 August 2021, S-32 to S-33 entire text, all drawings, (LIN, Hai. Delay-Doppler Plane Multicarrier Modulation for 6G.), non-official translation (Lecture proceedings 1 of 2021 IEICE Society Conference. BS-3-1.) | 1-13 |
| A | RAVITEJA, P. PHAN, K. T. HONG, Y. VITERBO, E. Interference Cancellation and Iterative Detection for Orthogonal Time Frequency Space Modulation. IEEE Transactions on Wireless Communications. October 2018, vol. 17, no. 10, pp. 6501-6515 entire text, all drawings | 1-13 |

☐ Further documents are listed in the continuation of Box C.    ☑ See patent family annex.

| \* | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **01 June 2022** | **14 June 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2022/011241**

| Patent document cited in search report | Publication date (day/month/year) | Patent family member(s) | Publication date (day/month/year) |
|---|---|---|---|
| US 2017/0244524 A1 | 24 August 2017 | WO 2016/176642 A1 paragraphs [0120]-[0131], fig. 33A, 33B, 34-35 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021043624 A
- JP 2021093751 A
- JP 2021140429 A

- US 8547988 B
- US 9590779 B

**Non-patent literature cited in the description**

- **R. HADANI et al.** Orthogonal Time Frequency Space Modulation. *IEEE Wireless Communications and Networking Conference (WCNC), San Francisco, CA, 2017,* 2017, 1-6